# EUROPÄISCHE PATENTSCHRIFT

(11) **EP 1 656 428 B1**
(45) Veröffentlichungstag und Bekanntmachung des Hinweises auf die Patenterteilung: **27.04.2011**
(21) Anmeldenummer: 04740871.1
(22) Anmeldetag: 09.07.2004
(51) Int. Cl.: C09D 175/04, C08G 18/08, C08F 283/00

(54) **POLYURETHAN-POLYMER-HYBRID-DISPERSION MIT VERBESSERTEN OBERFLÄCHENEIGENSCHAFTEN, VERFAHREN ZU IHRER HERSTELLUNG SOWIE DEREN VERWENDUNG**
POLYURETHANE-POLYMER HYBRID DISPERSION WITH ENHANCED SURFACE PROPERTIES, METHOD FOR THE PRODUCTION AND UTILIZATION THEREOF
DISPERSION HYBRIDE POLYMERE DE POLYURETHANNE A PROPRIETES DE SURFACE AMELIOREES, PROCEDES DE REALISATION ET UTILISATIONS

(30) Priorität: 11.07.2003 DE 10331484
(43) Veröffentlichungstag der Anmeldung: 17.05.2006
(73) Patentinhaber: Construction Research & Technology GmbH, 83308 Trostberg (DE)
(72) Erfinder: MAIER, Alois, 84549 Engelsberg (DE); INGRISCH, Stefan, 83376 Truchtlaching (DE); STEIDL, Norbert, 83361 Kienberg (DE); WEINELT, Frank, 84508 Burgkirchen (DE)
(74) Vertreter: Dey, Michael
(86) Internationale Anmeldenummer: PCT/EP2004/007592
(87) Internationale Veröffentlichungsnummer: WO 2005/007762

(56) Entgegenhaltungen:
- EP-A- 0 339 862
- WO-A-00/37518
- DE-A- 19 722 403

## Beschreibung

Die vorliegende Erfindung betrifft eine Polyurethan-Polymer-Hybrid-Dispersion mit verbesserten Oberflächeneigenschaften, ein Verfahren zu ihrer Herstellung sowie deren Verwendung.

(Fluormodifizierte, wässrige) Polymere gewinnen aufgrund ihrer einzigartigen Oberflächeneigenschaften (wasser- und ölabweisend) immer mehr an Bedeutung und sind somit prädestiniert für die Verwendung als schmutzabweisende Beschichtungssysteme. Dies zeigt sich nicht zuletzt an der Fülle der zu diesem Thema in jüngerer Zeit veröffentlichten Literatur (R. Winter, P. G. Nixon, R. J. Terjeson, J. Nohtasham, N. R. Holcomb, D. W. Grainger, D. Graham, D. G. Castner, G. L. Gard, J. Fluorine Chem, 2002, 115(2), 107-113; R. D. van de Grampel, W. Ming, J. Laven, R. van der Linde, F. A. M. Leermakers, Macromol., 2002, 35(14), 5670-5680; V. Castelvetro, M. Aglietto, F. Ciardelli, O. Chiantore, M. Lazzari, L. Toniolo, J. Coat. Technol., 2002, 74, 57-66).

Wasserbasierende Copolymer-Dispersionen bzw. -Emulsionen basierend auf Perfluoralkylgruppen-haltigen Monomeren sind schon seit längerem bekannt. Sie dienen zur Hydro- und Oleophobierung vor allem von Textilien bzw. Teppichen auch in Verbindung mit weiteren Textilhilfsmitteln, vorausgesetzt die Perfluoralkylgruppen sind linear und enthalten mindestens 6 Kohlenstoff-Atome.

Zur Herstellung dieser Copolymer-Dispersionen bzw. Emulsionen via Emulsionspolymerisation werden unterschiedliche Emulgatorsysteme verwendet und man erhält je nach Art des verwendeten Emulgatorsystems anionisch oder kationisch stabilisierte Copolymer-Dispersionen bzw. -Emulsionen mit unterschiedlichen anwendungstechnischen Eigenschaften.

Wässrige Dispersionen von Perfluoralkylgruppen enthaltenden Pfropfcopolymerisaten und ihre Verwendung als Hydrophobierungs- und Oleophobierungsmittel sind aus der Patentliteratur bereits seit einiger Zeit bekannt.

Die EP 0 452 774 A1 und DE 34 07 362 A1 beschreiben ein Verfahren zur Herstellung von wässrigen Dispersionen von Copolymerisaten und/oder Pfropfcopolymerisaten aus ethylenisch ungesättigten Perfluoralkylmonomeren und nicht-fluormodifizierten ethylenisch ungesättigten Monomeren, wobei als Pfropfgrundlage wässrige emulgatorfreie Polyurethan-Dispersionen verwendet wurden.

In der DE 36 07 773 C2 werden Perfluoralkylliganden enthaltende Polyurethane beschrieben, die in Form einer wässrigen Dispersion, jedoch unter Verwendung externer Emulgatoren, oder in Form einer Lösung in einem organischen Lösemittel (gemisch) ausschließlich zur Ausrüstung von Textilmaterialien und von Leder verwendet werden.

Perfluoralkylgruppen enthaltende Polyurethane zur Oleophob- und Hydrophob-Ausrüstung von Textilien sind auch in den Patentdokumenten DE 14 68 295 A1, DE 17 94 356 A1, DE 33 19 368 A1, EP 0 103 752 A1, US 3,398,182 B1, US 3,484,281 B1 und US 3,896,251 B1 beschrieben. Diese Verbindungen erfordern allerdings für die Anwendung große Mengen und zeigen eine ungenügende Haftung auf dem Substrat.

Die WO 99/26 992 A1 beschreibt wässrige fluor- und/oder silikonmodifizierte Polyurethan-Systeme mit geringen Oberflächenenergien, die zu wasser- und lösemittelstabilen harten Polyurethan-Filmen mit anti-fouling Eigenschaften aushärten, wobei folgende beiden Perfluoralkyl-Komponenten offenbart werden:

R_{f}-SO₂N-(Rₕ-OH)₂

mit R_{f} = Perfluoralkyl-Gruppe mit 1-20 C-Atomen und Rₕ = Alkyl-Gruppe mit 1-20 C-Atomen und

R_{f}R'_{f}CF-CO₂CH₂CR(CH₂OH)₂

mit R_{f}=C₄-C₆-Fluoralkyl, R'_{f}=C₁-C₃-Fluoralkyl und R = C₁-C₂-Alkyl.

In Wasser dispergierbare Sulfo-Polyurethan- oder Sulfo-Polyharnstoff-Zusammensetzungen mit niedriger Oberflächenenergie, speziell für tinteaufnehmende Beschichtungen, werden in der EP 0 717 057 B1 beschrieben, wobei die hydrophoben Segmente aus Polysiloxan-Segmenten oder einer gesättigten fluoraliphatischen Gruppe mit 6-12 Kohlenstoff-Atomen bestehen, von denen wenigstens 4 vollständig fluoriert sind.

Wässrige Dispersionen von wasserdispergierbaren Polyurethanen mit PerfluoralkylSeitenketten ohne die Verwendung externer Emulgatoren sind aus der EP 0 339 862 A1 bekannt. Als Isocyanat-reaktive Komponente wurde hier ein fluoriertes Polyol verwendet, das durch freie radikalische Addition eines Polytetramethylenglykols an ein fluoriertes Olefin (siehe EP 0 260 846 B1) erhalten worden ist. Die erhaltenen Polyurethan-Dispersionen besitzen aber durchweg Festkörpergehalte von unter 30 Gew.-% und benötigen zudem erhebliche Mengen an hydrophiler Komponente. Die Oberflächenenergien der getrockneten Filme betragen immer noch >30 dyne cm⁻¹.

In der US 4,636,545 werden wässrige Polyurethan-Dispersionen mit ggf. darin emulgierten blockierten Polyisocyanaten als Pfropfgrundlage zur radikalischen Pfropfung eines Polymerisats von ungesättigten Perfluoralkylmonomeren (M > 367 Dalton) und ggf. ungesättigten Comonomeren (in Lösemittel oder wässriger Emulsion) für die Hydro- und Oleophobierung von Textilien, natürlichen und synthetischen Fasern, Papier und Leder beschrieben. Der Festkörpergehalt beträgt 5 bis 50 Gew.-%, vorzugsweise 10 bis 30 Gew.-%, der Fluorgehalt 6 bis 50 Gew.-%, vorzugsweise 10 bis 30 Gew.-%. Die fluorierte Seitenkette wird nicht als Monomer in die PU-Hauptkette eingebaut, sondern als ungesättigte Fluorverbindung auf die Hauptkette einer fertigen PU-Dispersion radikalisch aufgepfropft. Dazu wird die ungesättigte Verbindung in Form einer Emulsion (lösemittelhaltig) der Polyurethan-Dispersion zugegeben.

Die US 5,703,194 beschreibt die kationische Polymerisation von Oxetanmonomeren mit perfluorierten Alkoxyseitenketten zur Herstellung von hydroxyfunktionellen Prepolymeren. Es werden jedoch keine wässrigen Systeme offenbart. Bedingt durch die Polyetherhauptkette sind die Systeme nicht UV-stabil.

In der EP 1 162 220 A1 werden kationische Polyurethan-Dispersionen, die thermisch nachvernetzbar sind, beschrieben. Die verwendeten Perfluoropolyether werden als Diol- oder Monolkomponente in die Hauptkette eingebaut. Die Molekularmassen der Polyurethane sind kleiner oder gleich 9000 Dalton.

Aus der WO 02/04 538 sind Systeme bekannt, bei denen Perfluoralkylseitenketten über Perfluorooxetanpolyol-Copolymere eingeführt werden. Bedingt durch die Polyetherhauptkette sind die Systeme nicht UV-stabil.

In der JP 09118843 werden wasserbasierende Zusammensetzungen aus fluormodifizierten Phosphorsäureestersalzen und einer niedermolekularen Urethanverbindung mit einem oder mehreren Perfluoralkylresten zur Vermeidung von Verfärbungen auf der Oberfläche von Abdichtungen an Stoßfugen beschrieben. Bei dieser Anmeldung handelt es sich nicht um ein PUR-Polymercoating.

Der vorliegenden Erfindung lag daher die Aufgabe zugrunde, eine ggf. fluormodifizierte Polyurethan-Polymer-Hybrid-Dispersion mit verbesserten Oberflächeneigenschaften zur permanenten öl- und wasserabweisenden Oberflächenbehandlung bzw. -modifizierung von mineralischen und nichtmineralischen Untergründen für verschiedene Anwendungsbereiche zu entwickeln, welche die genannten Nachteile des Standes der Technik nicht aufweist, sondern gute anwendungstechnische Eigenschaften besitzt und gleichzeitig unter Berücksichtigung ökologischer, ökonomischer und physiologischer Aspekte hergestellt werden kann.

Diese Aufgabe wurde erfindungsgemäß durch die Bereitstellung einer Polyurethan-Polymer-Hybrid-Dispersion gelöst, welche dadurch hergestellt worden ist, dass man
a) eine Dispersions-Komponente bzw. eine Bindemittel-Komponente auf Basis einer wässrigen Lösung oder Dispersion eines ggf. hydroxy- und/oder aminofunktionellen Polyurethan-Polymer-Hybrids mit fluorierten Seitenketten herstellt, wobei man
a₁) 5 bis 100 Gewichtsteile einer lateral fluormodifizierten anionisch stabilisierten Polyurethan-Basis-Dispersion (A) mit bevorzugt ideal linear segmentierter Struktur, einem polymer gebundenen Fluorgehalt von 0 bis 5 Gew.-%, einer Hydroxylzahl und/oder Aminzahl von 0 bis 250 mgKOH/g, einem Festkörpergehalt von 20 bis 60 Gew.-%, einem Lösemittelgehalt von 0 bis 20 Gew.-% und einer mittleren Molmasse von 5 000 bis 100 000 Dalton mit 3 bis 300 Gewichtsteilen einer Monomer-Komponente (B), bestehend aus
   (i) 1 bis 100 Gewichtsteilen eines oder mehrerer ungesättigter Monomere (B)(i) mit einer oder mehreren radikalisch polymerisierbaren Doppelbindungen ausgewählt aus den Gruppen Acrylsäure und deren Derivate und/oder Methacrylsäure und deren Derivate und/oder Styrol und dessen Derivate
      und/oder
   (ii) 1 bis 100 Gewichtsteilen eines oder mehrerer ungesättigter fluormodifizierter Monomere (B)(ii) mit einer oder mehreren radikalisch polymerisierbaren Doppelbindungen ausgewählt aus den Gruppen der Alkyl(per)fluoro(meth)acrylate und/oder (Per)fluoroalkyl(meth)acrylate und/oder (Per)fluoroalkyl-(per)fluoro(meth)acrylate und/oder Umsetzungsprodukte aus 1-(1-isocyanato-1-methyl-ethyl)-3-(2-propenyl)-benzol (m-TMI) und Perfluoroalkylalkoholen
      und/oder
   (iii) 1 bis 100 Gewichtsteilen eines oder mehrerer ungesättigter (ggf. fluormodifizierter) Monomere (B)(iii) mit einer oder mehreren radikalisch polymerisierbaren Doppelbindungen ausgewählt aus der Gruppe der polyhedralen oligomeren Polysilasesquioxane (POSS) der allgemeinen Formel (RSiO_{1.5})ₙ mit n = 4, 6, 8, 10, 12 und R = beliebiger organischer Rest mit 1 bis 100 C-Atomen und 0 bis 50 N- und/oder O- und/oder F- und/oder Si- und/oder S-Atomen und einer Molmasse von 250 bis 25 000 Dalton,
   mit 0,01 bis 10 Gewichtsteilen einer Initiator-Komponente (C), bestehend aus mindestens einem lipophilen Radikalinitiator mit einer oder mehreren thermisch labilen Azo- oder Peroxo-Gruppen sowie 0 bis 200 Gewichtsteilen Wasser versetzt, wobei die Monomer-Komponente (B), die Initiator-Komponente (C) und das Wasser gleichzeitig, nacheinander oder im Gemisch der Polyurethan-Basis-Dispersion (A) zudosiert werden können und anschließend
a₂) im Reaktionsgemisch aus Stufe a₁) durch den thermischen Zerfall der Komponente (C) eine radikalische Polymerisation der Komponente (B) innerhalb der Mizellen der Polyurethan-Basis-Dispersion (A) durchführt
   sowie ggf.
b) anschließend die Dispersions- bzw. Bindemittel-Komponente aus den Komponenten (A) bis (C) aus der Stufe a₂) mit 20 bis 100 Gewichtsteilen einer Vernetzer-Komponente bzw. eines Härters (D) umsetzt, wobei als Vernetzer-Komponente oder Härter (D) wasserdispergierbare (Lack-)Polyisocyanate mit aliphatisch und/oder cycloaliphatisch und/oder aromatisch gebundenen Isocyanat-Gruppen eingesetzt werden, welche 0 bis 25 Gew.-% eines organischen Lösemittels enthalten können.

Überraschenderweise wurde gefunden, dass durch die Verwendung geeigneter (Kombinationen) fluorierter Monomere in den Polyurethan-Polymer-Hybrid-Dispersionen nicht nur harte Beschichtungssysteme bzw. Oberflächen mit sehr niedrigen kritischen Oberflächenspannungen γ_{c} (geringer als Teflon^{®} mit 18,6 mN/m) und sehr hohen Kontaktwinkeln θ (im Bereich von Teflon^{®} mit 111 °) zugänglich sind, sondern dass diese darüber hinaus auch noch eine gegenüber dem bekannten Stand der Technik deutlich verringerte Anschmutzungsneigung ("dirt pickup") aufweisen. Dieses Eigenschaftsprofil wird bereits mit sehr geringen Fluorgehalten (0,5 bis 2,0 Gew.-% bezogen auf das Festharz) bzw. mit sehr geringen Mengen an fluorierten Monomeren erzielt. Entscheidend hierfür ist, dass die Polyurethan-Polymer-Hybrid-Dispersionen kovalent gebundene fluorierte Seitenketten aufweisen, die über die Polyurethan-Basis-Dispersion und/oder über radikalisch polymerisierbare Monomere eingeführt werden können. Zudem war nicht vorhersehbar, dass die fluormodifizierten Polyurethan-Polymer-Hybrid-Dispersionen auch noch lösemittelfrei oder lösemittelarm und mit hohen Festkörpergehalten hergestellt werden können und nur einen sehr geringen Bedarf an stabilisierenden Gruppen benötigen.

Die erfindungsgemäße Polyurethan-Polymer-Hybrid-Dispersion mit verbesserten Oberflächeneigenschaften ist definiert durch ihr mehrstufiges Herstellverfahren. In der Reaktionsstufe a) wird zunächst eine wässrige Lösung oder Dispersion eines ggf. hydroxy- und/oder aminofunktionellen Polyurethan-Polymer-Hybrids (Bindemittel) hergestellt, die dann ggf. in der Reaktionsstufe b) weiter mit einer Vernetzer-Komponente (Härter) umgesetzt wird.

In der Reaktionsstufe a₁) werden 5 bis 100 Gewichtsteile einer lateral fluormodifizierten anionisch stabilisierten Polyurethan-Basis-Dispersion (A) mit bevorzugt ideal linear segmentierter Struktur, einem polymer gebundenen Fluorgehalt von 0 bis 5. Gew.-%, einer Hydroxylzahl und/oder Aminzahl von 0 bis 250 mgKOH/ g, einem Festkörpergehalt von 20 bis 60 Gew.-%, einem Lösemittelgehalt von 0 bis 20 Gew.-% und einer mittleren Molmasse von 5000 bis 100000 Dalton mit einem Gemisch aus 3 bis 300 Gewichtsteilen einer Monomer-Komponente (B), bestehend aus 1 bis 100 Gewichtsteilen eines oder mehrerer ungesättigter Monomere (B)(i) mit einer oder mehreren radikalisch polymerisierbaren Doppelbindungen ausgewählt aus der Gruppen Acrylsäure und deren Derivate und/oder Methacrylsäure und deren Derivate und/oder Styrol und dessen Derivate und/oder 1 bis 100 Gewichtsteilen eines oder mehrerer ungesättigter fluormodifizierter Monomere (B)(ii) mit einer oder mehreren radikalisch polymerisierbaren Doppelbindungen ausgewählt aus den Gruppen der Alkyl(per)fluoro(meth)acrylate und/oder (Per)fluoroalkyl(meth)acrylate und/oder (Per)fluoroalkyl-(per)fluoro(meth)acrylate und/oder Umsetzungsprodukte aus 1-(1-isocyanato-1-methyl-ethyl)-3-(2-propenyl)-benzol (m-TMI) und Perfluoroalkylalkoholen und/oder 1 bis 100 Gewichtsteilen eines oder mehrerer ungesättigter (ggf. fluormodifizierter) Monomere (B)(iii) mit einer oder mehreren radikalisch polymerisierbaren Doppelbindungen ausgewählt aus der Gruppe der polyhedralen oligomeren Polysilasesquioxane (POSS) der allgemeinen Formel (RSiO_{1.5})ₙ mit n = 4, 6, 8, 10, 12 und R = beliebiger organischer Rest mit 1 bis 100 C-Atomen und 0 bis 50 N- und/oder 0 bis 50 O- und/oder 0 bis 50 F- und/oder 0 bis 50 Si- und/oder 0 bis 50 S-Atomen und einer Molmasse von 250 bis 25 000 Dalton, und 0,01 bis 10 Gewichtsteilen einer Initiator-Komponente (C), bestehend aus mindestens einem lipophilen Radikalinitiator mit einer oder mehreren thermisch labilen Azo- oder Peroxo-Gruppen sowie 0 bis 200 Gewichtsteilen Wasser versetzt, wobei die Monomer-Komponente (B), die Initiator-Komponente (C) und das Wasser gleichzeitig, nacheinander oder im Gemisch der Polyurethan-Basis-Dispersion (A) zudosiert werden können, zu einer (fluormodifizierten) Polyurethan-Polymer-Hybrid-Dispersion umgesetzt.

Als Komponente (A) werden bevorzugt ggf. hydroxy- und/oder aminofunktionalisierte Polyurethan-Dispersionen auf Basis von (hydrophob modifizierten) Polyalkylenglykolen, aliphatischen oder aromatischen Polyestern, Polycaprolactonen, Polycarbonaten, α,ω-Polybutadienpolyolen, α,ω-Polymethacrylatdiolen, α,ω-Dihydroxyalkylpolydimethylsiloxanen, Makromonomeren, Telechelen, hydroxyfunktionellen Epoxid-Harzen, oxidativ trocknenden Alkydharzen auf Basis von Bisepoxiden und ungesättigten Fettsäuren, hydroxyfunktionellen Polysulfiden oder Gemischen daraus eingesetzt.

Insbesondere sind Polyurethan-Dispersionen geeignet, die als Baugruppen lateral fluormodizierte Makromonomere auf Basis von Umsetzungsprodukten aus Perfluoroalkylalkoholen, Diisocyanaten und Diethanolamin, wobei vorzugsweise Perfluoralkylalkohole mit terminalen Methylen-Gruppen (Kohlenwasserstoff-Spacern) der allgemeinen Formel

CF₃-(CF₂)ₓ-(CH₂)_{y}-OH,

mit x=3-20 und y=1-6
oder Hexafluorpropenoxid (HFPO)-Oligomer-Alkohole der allgemeinen Formel

CF₃CF₂CF₂O-(CF(CF₃)CF₂O)_{z}-CF(CF₃)CH₂-OH,

mit z=1 - 10
oder aber Gemische aus diesen eingesetzt werden, und/oder Perfluoroalkylalkenen und Diethanolamin, wobei vorzugsweise Perfluoralkylalkene mit terminalen Methylen-Gruppen (Kohlenwasserstoff-Spacern) der allgemeinen Formel

CF₃-(CF₂)ₓ-CH₂=CH₂,

mit x=3-20
oder aber Gemische aus diesen verwendet werden, und/oder Alkyl(per)fluoro(meth) acrylaten und/oder (Per)fluoroalkyl(meth)acrylaten und/oder (Per)fluoroalkyl-(per) fluoro(meth)acrylaten und Diethanolamin und/oder (Per)fluoroalkylalkylenoxiden und N-Methylethanolamin oder Diethanolamin enthalten.

In einer besonders bevorzugten Ausführungsform wird die fluormodifizierte Polyurethan-Basis-Dispersion mit Hilfe des High Solids Zero VOC Process (vgl. EP 1 064 314 B1 sowie DE 102 08 567 A1) hergestellt. Dieses Verfahren stellt eine universelle Methode zur Herstellung von maßgeschneiderten Polyurethan-Dispersionen dar. Die geringen technischen Anforderungen des Verfahrens und der völlige Verzicht auf flüchtige und/oder nichtflüchtige organische Lösemittel ermöglichen hohe Raum/Zeit-Ausbeuten bei niedrigen Kosten. Die Performance der erfindungsgemäßen Polyurethan-Dispersionen hinsichtlich Lösemittel-Freiheit, Festkörper-Gehalt, Materialeigenschaften sind bemerkenswert. Hervorzuheben sind außerdem die Einfachheit und Reproduzierbarkeit des Verfahrens sowie die Lagerstabilität der Produkte. Diese Polyurethan-Dispersionen bzw. die Polyurethan-Polyharnstoff-Polymere weisen aufgrund ihres Herstellverfahrens eine ideal linear segmentierte Struktur auf. Bedingt durch die ideal linear segmentierte Struktur der Polyurethan-Polymeren resultiert intermolekular eine sehr ausgeprägte und regelmäßige Domänen-Struktur aus Hartsegmenten und Weichsegmenten. Hartsegmente bestehen aus Strukturelementen mit starren Urethan- und Harnstoff-Gruppen sowie kurzkettigen Diolen, die eine starke interchenare Wechselwirkung ausüben. Weichsegmente bestehen aus flexiblen Struktur-Elementen mit Carbonat-, Ester- und Ether-Gruppen, die eine schwache interchenare Wechselwirkung ausüben.

Der Terminus "ideal linear segmentierten Polyurethan-Polyharnstoff-Polymere" implementiert, dass
a) durch das zweistufige Herstellungsverfahren für das Polyurethan-Prepolymer nahezu ausschließlich symmetrische 2 : 1-Addukte aus 2 mol Polyisocyanat und 1 mol Polyol gebildet werden, wobei die Polyole mit den reaktiveren sekundären Isocyanat-Gruppen reagieren und die 2 : 1 - Addukte terminale primäre Isocyanat-Gruppen aufweisen,
b) durch das zweistufige Herstellungsverfahren für das Polyurethan-Prepolymer die Bildung von Oligourethanen unterdrückt wird, die bei einer vergleichsweise geringen Gesamtmenge an Carboxyl- bzw. Carboxylat-Gruppen (DMPA) und/oder der Sulfonsäure- bzw. Sulfonat-Gruppen zu einer unsymmetrischen Ladungsdichteverteilung im Polyurethan-Polyharnstoff-Polymer führen würde,
c) die 2 : 1-Addukte aus 2 mol Polyisocyanat und 1 mol Polyol über drei Struktureinheiten verfügen, die über zwei Urethan-Gruppen miteinander verknüpft sind,
d) entweder zwei der 2 : 1-Addukte aus 2 mol Polyisocyanat und 1 mol Polyol über weitere Struktureinheiten und über eine oder zwei Harnstoff-Gruppen verknüpft sind (Kettenverlängerung mit difunktionellem Amin oder Wasser unter CO₂-Abspaltung) oder aber ein 2 : 1-Addukt aus 2 mol Polyisocyanat und 1 mol Polyol zur Polymerkette hin über weitere Struktureinheiten (s. u.) und über eine oder zwei Harnstoff-Gruppen verknüpft ist (Kettenverlängerung mit difunktionellem Amin oder Wasser unter CO₂-Abspaltung) und zum Polymerende hin über weitere Struktureinheiten und über eine Harnstoffgruppe verknüpft ist (Kettenstoppung mit monofunktionellem Amin und/oder Wasser unter CO₂-Abspaltung),
e) durch die Kettenverlängerung und ggf. Kettenstoppung sowie durch die Reaktion der verbleibenden NCO-Gruppen mit Wasser lineare Segment-Polymere mit exzellenten mechanischen Eigenschaften gebildet werden,
g) eine gleichmäßige Verteilung der Carbonyl- bzw. Carboxylat-Gruppen (DMPA) und/oder der Sulfonsäure- bzw. Sulfonat-Gruppen hergestellt wird,
f) die Sequenz der Kettenverlängerungsmittel für die Erzielung der exzellenten mechanischen Eigenschaften unerheblich ist,
und damit eine regelmäßige Sequenz durch die Abfolge der definierten und symmetrischen 2 : 1 - Addukte aus 2 mol Polyisocyanat und 1 mol Polyol über das gesamte Polyurethan-Polyharnstoff-Polymer erhalten wird.

Die exzellente Material-Eigenschaften der (fluormodifizierten) Polyurethan-Dispersionen werden bei geeigneter Prozessführung auf die (fluormodifizierten) Polyurethan-Polymer-Hybrid-Dispersionen übertragen. Je nach Wahl der (fluormodifizierten) Polyurethan-Dispersionen und der (fluormodifizierten) Monomer-Komponente können Dehnung und Dehnung bei der Zugfestigkeit über weite Bereiche nahezu beliebig variiert werden.

Als Komponente (B)(i) werden mindestens ein Monomer mit einer oder mehreren radikalisch polymerisierbaren Doppelbindungen wie Acrylsäure und deren Derivate und/oder Methacrylsäure und deren Derivate und/oder Styrol und dessen Derivate eingesetzt. Vorzugsweise werden Acrylsäure, Acrylsäureanhydrid, Acrylsäureamid, Acrylsäuredimethylamid, Acrylsäurenitril, Acrylsäuremethylester, Acrylsäureethylester, Acrylsäurevinylester, Acrylsäurepropylester, Acrylsäureisopropylester, Acrylsäurebutylester, Acrylsäureisobutylester, Acrylsäure-tert.-butylester, Acrylsäurehexylester, Acrylsäurecyclohexylester, Acrylsäureoctylester, Acrylsäure-(2-ethylhexylester), Acrylsäure-(3,3,5-trimethylhexylester), Acrylsäuredodecylester, Acrylsäureisododecylester, Acrylsäureoctadecylester sowie Acrylsäure-(2-hydroxyethylester), Acrylsäure-(hydroxypropylester) (Isomeren-Gemisch), Acrylsäure-[(2-dimethylamino)-ethylester], Acrylsäure-[(3-dimethylamino)-propylester], Acrylsäure-(3-sulfopropylester) Kaliumsalz, Methacrylsäure, Methacrylsäureanhydrid, Methacrylsäureamid, Methacrylsäuredimethylamid, Methacrylsäurenitril, Methacrylsäuremethylester, Methacrylsäureethylester, Methcrylsäurevinylester, Methacrylsäurepropylester, Methacrylsäureisopropylester, Methacrylsäurebutylester, Methacrylsäureisobutylester, Methacrylsäure-tert.-butylester, Methacrylsäurehexylester, Methacrylsäureyclohexylester, Methacrylsäureoctylester, Methacrylsäure-(2-ethylhexylester), Methacrylsäuredodecylester, Methacrylsäureisododecylester, Methacrylsäureoctadecylester, Methacrylsäurebenzylester sowie Methacrylsäure-(2-hydroxyethylester), Methacrylsäure-(hydroxypropylester) (Isomeren-Gemisch), Methacrylsäure-[(2-dimethylamino)-ethylester], Methacrylsäure-2,3-epoxypropylester, Methacrylsäure-[2-(acetoacetoxy)-ethylester], Methacrylsäure-(3-sulfopropylester) Kaliumsalz, Dimethyl-[2-(methacryloyloxy)-ethyl]-(3-sulfopropyl)-ammonium-betain, Dimethyl-[3-(methacryloylamino)-propyl]-(3-sulfopropyl)-ammonium-betain, 2-Acrylamido-2-methylpropan-1-sulfonsäure (AMPS^{®}) und deren Salze, Styrol, Methylstyrol, Ethylstyrol, Divinylbenzol, Styrolsulfonsäure, Natrium-Salz eingesetzt. Daneben können auch noch (Meth)acrylsäureester mit einer radikalisch polymerisierbaren Doppelbindung auf Basis von Methoxypolyethylenglykol, (Meth)acrylsäureester mit zwei oder mehreren radikalisch polymerisierbaren Doppelbindungen auf Basis von niedermolekularen und/oder hochmolekularen polymeren Polyolen eingesetzt werden. Grundsätzlich ebenfalls geeignet sind Vinylhalogenide wie Vinylchlorid, Vinylester wie Vinylacetat, 1,3-Butadien, Isopren sowie Maleinsäureanhydrid und dessen Derivate. Besonders bevorzugt werden Kombinationen aus 5 bis 95 Gew.-% Methylmethacrylat und 5 bis 95 Gew.-% n-Butylacrylat.

Als Komponente (B)(ii) wird mindestens ein fluormodiziertes Monomere mit einer oder mehreren radikalisch polymerisierbaren Doppelbindungen wie Alkyl(per)fluoro (meth)acrylate und/oder (Per)fluoroalkyl(meth)acrylate und/oder (Per)fluoroalkyl-(per)fluoro(meth)acrylate und/oder Umsetzungsprodukte aus 1-(1-Isocyanato-1-methyl-ethyl)-3-(2-propenyl)-benzol (m-TMI) und Perfluoroalkylalkoholen eingesetzt. Vorzugsweise werden 1H,1H,7H-Dodecafluoroheptylacrylat, 1H,1H,9H-Hexadecafluorononylacrylat, 1H,1H,3H-Hexafluorobutylacrylat, 1H,1H,5H-Octafluoropentylacrylat, 2,2,3,3,3-Pentafluoropropylacrylat, 2-(Perfluorobutyl)ethylacrylat, 3-(Perfluorobutyl)-2-hydroxypropylacrylat, 2-(Perfluorodecyl)ethylacrylat, 2-(Perfluorohexyl)ethylacrylat, 3-Perfluorohexyl-2-hydroxypropylacrylat, 2-(Perfluoro-3-methylbutyl)ethylacrylat, 3-(Perfluoro-3-methylbutyl)-2-hydroxypropylacrylat, 2-(Perfluoro-5-methylhexyl)ethylacrylat, 3-(Perfluoro-5-methylhexyl)-2-hydroxypropylacrylat, 2-(Perfluoro-7-methyloctyl) ethylacrylat, 3-(Perfluoro-7-methyloctyl)-2-hydroxypropylacrylat, 2-(Perfluorooctyl) ethylacrylat, 3-Perfluorooctyl-2-hydroxypropylacrylat, 1H,1H,3H-Tetrafluoropropylacrylat, 2,2,2-Trifluoroethylacrylat, 1H-1-(Trifluoromethyl) trifluoroethylacrylat, 1H, 1H,7H-Dodecafluoroheptylmethacrylat, 3,3,4,4,5,5,6,6,7,7,8,8,9,9,10,10,10-Heptadecafluorodecylmethacrylat, 1H,1H,9H-Hexadecafluorononylmethacrylat, 1H,1H,3H-Hexafluorobutylmethacrylat, 1H,1H,5H-Octafluoropentylmethacrylat, 2,2,3,3,3-Pentafluoropropylmethacrylat, 2-(Perfluorobutyl)ethylmethacrylat, 3-(Perfluorobutyl)-2-hydroxypropylmethacrylat, 2-(Perfluorodecyl)ethylmethacrylat, 2-(Perfluorohexyl)ethylmethacrylat, 3-Perfluorohexyl-2-hydroxypropylmethacrylat, 2-(Perfluoro-3-methylbutyl) ethylmethacrylat, 3-(Perfluoro-3-methylbutyl)-2-hydroxypropylmethacrylat, 2-(Perfluoro-5-methylhexyl)ethylmethacrylat, 3-(Perfluoro-5-methylhexyl)-2-hydroxypropylmethacrylat, 2-(Perfluoro-7-methyloctyl)ethylmethacrylat, 3-(Perfluoro-7-methyloctyl)-2-hydroxypropylmethacrylat, 2-(Perfluorooctyl) ethylmethacrylat, 3-Perfluorooctyl-2-hydroxypropylmethacrylat, 1H,1H,3H-Tetrafluoropropylmethacrylat, 3,3,4,4,5,5,6,6,7,7,8,8,8-Tridecafluorooctylmethacrylat, 2,2,2-Trifluoroethylmethacrylat, 1H-1-(Trifluoromethyl)trifluoroethylmethacrylat eingesetzt. Besonders bevorzugt werden (Per)fluoroalkylmethacrylate.

Als Komponente (B)(iii) wird mindestens ein (ggf. fluormodifiziertes) Monomer mit einer oder mehreren radikalisch polymerisierbaren Doppelbindungen wie polyhedrale oligomere Polysilasesquioxane (POSS) der allgemeinen Formel (RSiO_{1.5})ₙ mit n = 4, 6, 8, 10, 12 und R = beliebiger organischer Rest mit 1 bis 100 C-Atomen und 0 bis 50 N- und/oder 0 bis 50 O- und/oder 0 bis 50 F- und/oder 0 bis 50 Si- und/oder 0 bis 50 S-Atomen eingesetzt.

Silasesquioxane sind oligomere oder polymere Stoffe, deren vollständig kondensierte Vertreter die allgemeinen Formel (SiO_{3/2}R)ₙ besitzen, wobei n > 4 und der Rest R ein Wasserstoffatom sein kann, meist jedoch einen organischen Rest darstellt. Die kleinste Struktur eines Silasesquioxans ist der Tetraeder. Voronkov und Lavrent'yev (Top. Curr. Chem. 102 (1982), 199-236) beschreiben die Synthese von vollständig kondensierten und unvollständig kondensierten oligomeren Silasesquioxanen durch hydrolytische Kondensation trifunktioneller RSiY₃-Vorstufen, wobei R für einen Kohlenwasserstoffrest steht und Y eine hydrolisierbare Gruppe, wie z. B. Chlorid, Alkoxid oder Siloxid, darstellt. Lichtenhan et al. beschreiben die basenkatalysierte Herstellung von oligomeren Silasesquioxanen (WO 01/10 871). Silasesquioxane der Formel R₈Si₈O₁₂ (mit gleichen oder unterschiedlichen Kohlenwasserstoffresten R) können basenkatalysiert zu funktionalisierten, unvollständig kondensierten Silasesquioxanen, wie z. B. R₇Si₇O₉(OH)₃ oder auch R₈Si₈O₁₁(OH)₂ und R₈Si₈O₁₀(OH) 4, umgesetzt werden (Chem. Commun. (1999), 2309-10; Polym. Mater. Sci. Eng. 82 (2000), 301-2; WO 01/10 871) und damit als Stammverbindung für eine Vielzahlverschiedener unvollständig kondensierter und funktionalisierter Silasesquioxane dienen. Insbesondere die Silasesquioxane (Trisilanole) der Formel R₇Si₇O₉(OH)₃ lassen sich durch Umsetzung mit funktionalisierten, monomeren Silanen (corner capping) in entsprechend modifizierte oligomere Silasesquioxane überführen.

Vorzugsweise werden polyhedrale oligomere Polysilasesquioxane (POSS) der allgemeinen Formel (RSiO_{1.5})₈ mit R = Methacryloyloxypropyl und ggf. CH₂CH₂CF₂CF₂CF₂CF₂CF₂CF₃ und/oder H und/oder C₁-C₂₅-Alkyl und/oder C₃-C₂₅-Cycloalkyl und/oder C₆-C₃₀-Aryl und/oder (CH₂)₃(OCH₂CH₂)ₙOMe und/oder Aminopropyl und/oder Epoxypropyl und/oder Dimethoxysilyloxy und/oder Isocyanatopropyl und/oder Triethoxysilylpropyl eingesetzt. Als besonders bevorzugt sind polyhedrale oligomere Polysilasesquioxane (POSS) der allgemeinen Formel (RSiO_{1.5})₈ mit R = Methacryloyloxypropyl und ggf. CH₂CH₂CF₂CF₂CF₂CF₂CF₂CF₃ und/oder Alkyl anzusehen.

Es ist im Rahmen der vorliegenden Erfindung jedoch auch möglich, als Komponente (B)(iii) reaktive polyhedrale oligomere Polysilasesquioxane (POSS) der allgemeinen Formel

(RₐX_{b}SiO_{1,5})ₘ

zu verwenden, wobei a = 0 oder 1, b = 0 oder 1, a + b = 1, m = 2, 6, 8, 10, 12 sowie R = Wasserstoffatom, Alkyl-, Cycloalkyl-, Alkenyl-, Cycloalkenyl-, Alkinyl-, Cycloalkinylgruppe oder Polymereinheit, die jeweils substituiert oder unsubstituiert sind oder weitere funktionalisierte polyedrische oligomere Silizium-Sauerstoffclustereinheiten, die über eine Polymereinheit oder eine Brückeneinheit angebunden sind, X=Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphin-, Polyethergruppe oder mindestens eine solche Gruppe vom Typ X aufweisenden Substituenten vom Typ R, bedeuten und sowohl die Substituenten vom Typ R als auch die Substituenten vom Typ X gleich oder unterschiedlich sind.

Als Komponente (C) wird mindestens ein lipophiler Radikal-Initiator mit einer oder mehreren thermisch labilen Azo- oder Peroxo-Gruppen eingesetzt, der bei einer Zerfallstemperatur im Bereich von 40 bis 120 °C eine Halbwertszeit von einer Stunde aufweist. Vorzugsweise werden anorganische Peroxide wie Ammoniumperoxodisulfat, Natriumperoxodisulfat, Kaliumperoxodisulfat, Wasserstoffperoxid, organische Peroxide wie Percarbonate, Diacylperoxide wie Dibenzoylperoxid, Alkylperoxide wie tert.-Butylhydroperoxid, Cumolhydroperoxid, Dialkylperoxide wie Di-tert.-butylperoxid, Acylalkylperoxide wie tert. Butylperoxybenzoat, Azo-Initiatoren wie 2,2'-Azobis(2-methylbutyronitril), 2,2'-Azobis(2-methylpropionitril) bzw. 2,2'-Azoisobutyronitril eingesetzt. Besonders bevorzugt werden Radikal-Initiatoren, die bei einer Zerfallstemperatur von 70 bis 90° C eine Halbwertszeit von 1 Stunde aufweisen, insbesondere 2,2'-Azobis(2-methylbutyronitril) und/oder 2,2'-Azobis(2-methylpropionitril).

Das Initiator/Monomer-Molverhältnis der Komponenten (B) und (C) wird in einem Bereich von 0,001 bis 0,05 eingestellt.

Die Reaktionsstufe a₁) wird bei einer Temperatur von 15 bis 35 °C, vorzugsweise bei 20 bis 30 °C, durchgeführt.

Zur weiteren Durchführung dieses Verfahrens wird unter Anwendung der bei Polymerisationen üblichen Techniken in der Reaktionsstufe a₂) im Reaktionsgemisch aus Stufe a₁) durch den thermischen Zerfall der Komponente (C) eine radikalische Polymerisation der Komponente (B) innerhalb der Mizellen der Polyurethan-Basis-Dispersion (A) durchgeführt.

Zur Herstellung von Polyurethan-Polymer-Hybrid-Dispersionen wird in der Technik üblicherweise das in der Literatur häufig als In-Situ Polymerisation bezeichnete Verfahren in seinen verschiedenen Varianten verwendet.

### Variante A Batch Process)

Die Monomeren werden einzeln bzw. im Gemisch vor der radikalischen Polymerisation vollständig in die Polyurethan-Basis-Dispersion eingebracht.

### Variante B (Seed-Feed Process)

Die Monomeren werden einzeln oder im Gemisch während der radikalischen Polymerisation kontinuierlich in die Polyurethan-Basis-Dispersion eingebracht.

### Variante C (Kombination aus Batch Process und Seed-Feed Process)

Ein Teil der Monomeren wird einzeln oder im Gemisch vor der radikalischen Polymerisation in die Polyurethan-Basis-Dispersion eingebracht und der Rest der Monomeren wird einzeln oder im Gemisch während der radikalischen Polymerisation kontinuierlich in die Polyurethan-Basis-Dispersion eingebracht.

Der Initiator kann zusammen mit den Monomeren oder separat zugegeben werden. Üblicherweise wird der Initiator vor der radikalischen Polymerisation in den Monomeren oder im Monomerengemisch gelöst oder in der mit Monomer oder Monomerengemisch versetzten Polyurethan-Basis-Dispersion gelöst.

Das Wasser dient zu Einstellung des Festkörpergehaltes und kann vor Zugabe der Monomeren bzw. des Monomerengemisches und/oder gemeinsam mit den Monomeren bzw. Monomerengemischen (Preemulsion) und/oder nach der radikalischen Polymerisation zugegeben werden.

Der Vorteil dieses Herstellungsverfahrens liegt darin, dass Monomere und Initiator zusammen bei Raumtemperatur zugegeben werden können und dass für deren Stabilisierung in der Polyurethan-Dispersion keinerlei zusätzliche (externe) Emulgatoren notwendig sind. Die Monomeren und der Initiator werden durch die Mizellen der Polyurethan-Dispersion emulgiert. Bei der radikalischen Polymerisation wird innerhalb der Micellen ein interpenetrating network aus Polyurethan-Harzen und Polymer-Harzen gebildet, die durch eine physikalische Vernetzung miteinander verbunden sind. Bei der Hybridisierung verringert sich die Ladungsdichte bzw. die Zahl der Carboxylat-Gruppen im Polyurethan-Polymer-Hybrid [meq·(100 g)⁻¹] üblicherweise beträchtlich. Die Ladungsdichte der Mizellen der Polyurethan-Dispersion bzw. der anionisch modifizierten Polyurethan-Polymeren ist in jedem Fall ausreichend groß, um zusätzlich sowohl die Monomeren als auch die aus den Monomeren hergestellten Polymeren ausreichend stabilisieren zu können.

Die Emulsionspolymerisation in der Reaktionsstufe a₂) wird vorzugsweise ohne weitere Emulgatoren durchgeführt. Nach beendeter Polymerisation wird die fertige fluormodizierte Polyurethan-Polymer-Hybrid-Dispersion gemäß einer bevorzugten Ausführungsform abgekühlt und über ein 100µm-Sieb filtriert, evtl. vorhandener erhärteter Schaum wird dabei vollständig abgetrennt. Die Lagerstabilität der Polyurethan-Polymer-Hybrid-Dispersionen beträgt mindestens ein Jahr.

Die Reaktionsstufe a₂) wird bei einer Temperaturdifferenz von ± 10 °C bezogen auf die Temperatur, bei der die Komponente (C) eine Halbwertszeit von 1 Stunde aufweist, durchgeführt. Vorzugsweise wird die Reaktionsstufe a₂) bei einer Temperatur von 80 ± 10 °C bei Verwendung von 2,2'-Azobis(2-methylbutyronitril) und/oder 2,2'-Azobis(2-methylpropionitril) als Komponente (C) durchgeführt.

Der Gehalt an Carboxylat- und/oder Sulfonat-Gruppen im anionisch modifizierten Polyurethan-Hybrid-Polymer aus den Komponenten (A) bis (C) wird auf 5 bis 25 meq·(100 g)⁻¹, vorzugsweise auf 10 bis 20 meq·(100-g)⁻¹, und die Säurezahl auf 2,5 bis 15 meq KOH·g⁻¹, vorzugsweise auf 5 bis 12,5 meq KOH·g⁻¹, eingestellt.

Der Festkörper-Gehalt an (fluormodifiziertem) Polyurethan-Polymer-Hybrid bestehend aus den Komponenten (A) bis (C) wird auf 30 bis 70 Gew.-%, vorzugsweise auf 40 bis 60 Gew.-%, bezogen auf die Gesamtmenge der (fluormodifizierten) Polyurethan-Polymer-Hybrid-Dispersion eingestellt.

Das Verhältnis der anteiligen Festkörper-Gehalte aus (fluormodifiziertem) Polyurethan-Harz aus der Komponente (A) und (fluormodifiziertem) Polymer-Harz aus Komponenten (B) und (C) wird vorzugsweise auf 20 zu 80 bis 80 zu 20 Gew.-%, vorzugsweise auf 40 zu 60 bis 60 zu 40 Gew.-%, eingestellt.

Die (fluormodifizierten) Polyurethan-Polymer-Hybrid-Dispersionen enthalten weniger als 10 Gew.-% an organischen Lösemitteln, wobei diese vorwiegend durch die Polyurethan-Basis-Dispersion eingeführt werden. Zur Verbesserung der Verfilmung bzw. Koaleszenz der (fluormodifizierten) Polyurethan-Polymer-Hybrid-Dispersion können während oder nach der Herstellung gemäss den Reaktionsstufen a₁) und a₂) weitere organische Lösemittel bzw. Koaleszenzhilfsmittel wie N-Methylpyrrolidon, Glykolether wie Dipropylenglykoldimethylether (Proglyde DMM^{®}) und cyclische Alkylencarbonate, eingesetzt werden. Bevorzugt enthält die (fluormodifizierte) Polyurethan-Polymer-Hybrid-Dispersion weniger als 10 Gew.-% an organischen Lösemitteln. Gemäss einer besonders bevorzugten Ausführungsform liegt die (fluormodifizierte) Polyurethan-Polymer-Hybrid-Dispersion lösemittelfrei vor.

Die mittleren Partikelgrößen der (fluormodifizierten) Polyurethan-Polymer-Hybrid-Dispersionen aus den Komponenten (A) bis (C) betragen 50 bis 500 nm, vorzugsweise 100 bis 400 nm.

Die mittleren Molekularmassen (Zahlenmittel) der (fluormodifizierten) Polyurethan-Polymer-Hybrid-Dispersionen aus den Komponenten (A) bis (C) betragen 50 000 bis 500 000 Dalton.

Der Restmonomer-Gehalt beträgt weniger als 0,1 Gew.-% bezogen auf die Gesamtmenge der (fluormodifizierten) Polyurethan-Polymer-Hybrid-Dispersion.

Das reine Polymer aus den Komponenten (B) und (C) in Reaktionsstufe a₂) weist eine bevorzugte Glasübergangstemperatur von -50 bis +100 °C, insbesondere -25 bis +25 °C, auf. Die Berechnung erfolgt mit Hilfe der Fox-Gleichung.

Ggf. wird in der anschließenden Reaktionsstufe b) die Dispersions-Komponente (Bindemittel) aus den Komponenten (A) bis (C) aus der Stufe a₂) mit 20 bis 100 Gewichtsteilen einer Vernetzer-Komponente (D) (Härter) umgesetzt , wobei als Vernetzer-Komponente (D) wasserdispergierbare (Lack-)Polyisocyanate mit aliphatisch und/oder cycloaliphatisch und/oder aromatisch gebundenen Isocyanat-Gruppen eingesetzt werden, welche 0 bis 25 Gew.-% eines organischen Lösemittels enthalten können. Das Verhältnis von Vernetzer-Komponente (D) zur Bindemittel-Komponente aus den Komponenten (A) bis (C) beträgt 1 : 3 bis 1 : 5. Nach der Applikation erhält man ein hochvernetztes fluormodifiziertes Polyurethan-Beschichtungssystem mit verbesserter Chemikalienbeständigkeit.

Als Vernetzer-Komponente (D) werden wasserdispergierbare Polyisocyanate mit aliphatisch und/oder cycloaliphatisch und/oder aromatisch gebundenen Isocyanat-Gruppen, welche 0 bis 25 Gewichtsteile eines organischen Lösemittels enthalten, eingesetzt. Die aliphatischen Polyisocyanate sind gegenüber den aromatischen Polyisocyanaten zu bevorzugen. Geeignet sind insbesondere die in der PolyurethanChemie hinreichend bekannten "Lackpolyisocyanate" auf Basis von Bis-(4-isocyanatocyclo-hexyl)-methan (H₁₂MDI), 1,6-Diisocyanatohexan (HDI), 1-Isocyanato-5-isocyanatomethyl-3,3,5-trimethyl-cyclohexan (IPDI) oder Kombinationen daraus. Der Begriff "Lackpolyisocyanate" kennzeichnet Allophanat-, Biuret-, Carbodiimid-, Isocyanurat-, Uretdion-, Urethan-Gruppen aufweisende Derivate dieser Diisocyanate, bei denen der Rest-Gehalt an monomeren Diisocyanaten dem Stand der Technik entsprechend auf ein Minimum reduziert wurde. Daneben können auch noch hydrophil modifizierte Polyisocyanate eingesetzt werden, die beispielsweise durch Umsetzung von "Lackpolyisocyanaten" mit Polyethylenglykol zugänglich sind. Als geeignete Polyisocyanate können beispielsweise handelsübliche HDI-Isocyanurate ohne (Handelsname Rhodocoat WT 2102, Fa. Rhodia AG) oder mit hydrophiler Modifizierung (Handelsname Basonat P LR 8878, Fa. BASF AG, Handelsname Desmodur DA bzw. Bayhydur 3100 der Fa. Bayer AG) eingesetzt werden. Bevorzugt werden aliphatische Polyisocyanate ohne permanente hydrophile Modizierung.

Zur Herstellung des gebrauchsfertigen wässrigen hochvemetzten Zweikomponenten-Polyurethan-Beschichtungsmittels wird die Vernetzer-Komponente (D) ("Härter", Teil B) kurz vor der Verarbeitung in die Bindemittel-Komponente aus den Komponenten (A) bis (C) ("Stammlack", Teil A) eingemischt. Um ein problemloses Emulgieren zu erreichen, empfiehlt es sich, die Polyisocyanate mit geringen Mengen organischer Lösemittel wie z.B. Dipropylenglykoldimethylether (Proglyde DMM^{®}), Butyl(di)glykolacetat oder Butylacetat zu verdünnen. Meistens sind einfache Emulgiertechniken beispielsweise mit einem mechanischen Rührwerk (Bohrmaschine mit Rührer) oder einfaches Mischen der beiden Komponenten per Hand ausreichend, um eine homogene Verteilung der Polyisocyanat-Tröpfchen in der Bindemittel-Komponente zu gewährleisten. Die Mengen der Bindemittel-Komponente und der Vernetzer-Komponente werden dabei so bemessen, dass das NCO/(OH+NH₍₂₎)-Equivalentverhältnis der Isocyanat-Gruppen der Vernetzer-Komponente und der Hydroxyl- und/oder Amino-Gruppen der Bindemittel-Komponente auf 1,1 bis 1,6, vorzugsweise 1,2 bis 1,4 eingestellt wird.

Es lassen sich auf diese Weise, bedingt durch eine hohe Vernetzungsdichte in Verbindung mit einer hohen Härte, schmutzabweisende Beschichtungen mit hervorragenden Eigenschaften erzielen. Dies gilt sowohl im Hinblick auf die Verarbeitbarkeit als auch in Bezug auf die mechanischen Eigenschaften verbunden mit einer sehr guten Lösemittel- und Chemikalienbeständigkeit. Aufgrund des vergleichsweise niedrigen Gehalts an hydrophilen Gruppen in der Bindemittel-Komponente zeichnen sich die Beschichtungen auch durch eine ausgezeichnete Wasserfestigkeit aus.

Die Reaktionsstufe b) wird bei einer Temperatur von 15 bis 35°C, vorzugsweise bei 20 bis 30 °C, durchgeführt.

Obgleich die erfindungsgemäß formulierte Polyurethan-Polymer-Hybrid-Dispersion in ein- und zweikomponentiger Form zum Einsatz kommen kann, ist die einkomponentige Form wegen der besseren Handhabbarkeit als bevorzugt anzusehen. Im Falle einer zweikomponentigen Applikation werden die (fluormodifizierten) Polyurethan-Polymer-Hybrid-Dispersionen als Bindemittel-Komponente und wasseremulgierbare Polyisocyanate als Härter-Komponente eingesetzt.

Ein weiterer Gegenstand der vorliegenden Erfindung betrifft die Verwendung von (fluormodifizierten) Polyurethan-Polymer-Hybrid-Dispersionen mit verbesserten Oberflächeneigenschaften im Bau- oder Industriebereich zur permanenten öl- und wasserabweisenden Oberflächenbehandlung bzw. -modifizierung von mineralischen und nichtmineralischen Untergründen, wie
a) Anorganische Oberflächen,
   wie z.B. poröse, saugende, raue und polierte Baumaterialien und Bauwerkstoffe aller Art (wie z. B. Beton, Gips, Kieselsäure und Silikate, Kunststein, Naturstein (wie z. B. Granit, Marmor, Sandstein, Schiefer, Serpentin), Ton, Zement, Ziegel) sowie Emaille, Füllstoffe und Pigmente, Glas, Keramik, Metalle und Metalllegierungen,
b) Organische Oberflächen,
   wie z. B. Holz und Holzwerkstoffe, Holzfurnier, glasfaserverstärkte Kunststoffe (GFK), Kunststoffe, Leder, Naturfasern, polare organische Polymere aller Art, Verbundmaterialien.

Die erfindungsgemäß vorgeschlagenen erfindungsgemäßen (fluormodifizierten) Polyurethan-Polymer-Hybrid-Dispersionen mit verbesserten Oberflächeneigenschaften eignen sich zur permanenten öl- und wasserabweisenden Oberflächenbehandlung bzw. -modifizierung in den Anwendungsbereichen

Bau, wie z. B.
- Antigraffiti / Antisoiling Coatings,
- Easy-To-Clean Coatings,
- weitere Beschichtungen aller Art (wie z. B. Balkonbeschichtungen, Dach (ziegel)beschichtungen, Einbrennlacke, Farben und Lacke, Fassadenfarben, Bodenbeschichtungen, leicht-, mittel und hochbelastbare Industrieböden, Parkdeckbeschichtungen, Sportböden),
- Abdichtungen,
- Betonfertigteile,
- Betonformteile,
- Fliese und Fuge,
- Kleb- und Dichtstoffe,
- Lärmschutzwände,
- Korrosionsschutz,
- Putze und Dekorputze,
- Wärmedämmverbundsysteme (WDVS) und Wärmedämmsysteme (WDS)
sowie

Nichtbau und Industrie, wie z. B.
- Automobilindustrie,
- Coil Coatings,
- Einbrennlacke,
- Glasfassaden und Glasoberflächen,
- Keramik und Sanitärkeramik,
- Lederzurichtung,
- oberflächenmodifizierte Füllstoffe und Pigmente,
- Papierbeschichtung,
- Rotoren von Windkraftanlagen
- Schiffsfarben.

Die erfindungsgemäßen (fluormodifizierten) Polyurethan-Polymer-Hybrid-Dispersionen mit verbesserten Oberflächeneigenschaften können für die jeweiligen Anwendungsgebiete in formulierter oder unformulierter Form eingesetzt werden. Bei den Formulierungsbestandteilen handelt es sich bspw. um Entschäumer, Entlüfter, Gleit- und Verlaufadditive, Dispergieradditive, Substratnetzadditive, Hydrophobierungsmittel, Rheologieadditive, Koaleszenzhilfsmittel, Mattierungsmittel, Haftvermittler, Frostschutzmittel, Antioxidantien, UV-Stabilisatoren, Bakterizide, Fungizide, weitere Polymere und/oder Polymer-Dispersionen, Füllstoffe, Pigmente und Nanopartikel aller Art oder geeignete Kombination daraus, wobei die einzelnen Formulierungs-Bestandteile dabei als inert zu betrachten sind. Die Formulierungs-Bestandteile können während und/oder nach der Herstellung der (fluormodifizierten) Polyurethan-Polymer-Hybrid-Dispersionen eingebracht werden. Es ist prinzipiell auch möglich, innerhalb von Formulierungen die erfindungsgemäßen (fluormodifizierten) Polyurethan-Polymer-Hybrid-Dispersionen mit verbesserten Oberflächeneigenschaften mit wässrigen oder nichtwässrigen Bindemitteln zu kombinieren und/oder Formulierungen auf Basis der erfindungsgemäßen (fluormodifizierten) Polyurethan-Polymer-Hybrid-Dispersionen mit verbesserten Oberflächeneigenschaften mit Formulierungen auf Basis von wässrigen oder nichtwässrigen Bindemitteln zu kombinieren. Der Begriff wässrige oder nichtwässrige Bindemittel kennzeichnet dabei wasserbasierende Polyurethane, Polymer-Dispersionen, redispergierbare PolymerPulver oder nichtwässrige lösemittelhaltige oder lösemittelfreie und ggf. reaktive Polymere. Zur Verbesserung der Ausrichtung der Perfluoroalkylketten bzw. zur Verhinderung der Mizellbildung an der Oberfläche können ggf. fluorhaltige Tenside eingesetzt werden.

Die Applikation der erfindungsgemäßen (fluormodifizierten) Polyurethan-Polymer-Hybrid-Dispersionen mit verbesserten Oberflächeneigenschaften erfolgt mit den aus der Lacktechnologie bekannten Methoden, wie z.B. Fluten, Gießen, Rakeln, Rollen, Spritzen, Streichen, Tauchen, Walzen.

Die Trocknung und Aushärtung der aus den erfindungsgemäßen (fluormodifizierten) Polyurethan-Polymer-Hybrid-Dispersionen mit verbesserten Oberflächeneigenschaften hergestellten Beschichtungen erfolgt im Allgemeinen bei normalen (Außen- und Innen-)Temperaturen im Bereich von 5 bis 50°C, d.h. ohne spezielles Erhitzen der Beschichtungen, kann jedoch je nach Anwendung auch bei höheren Temperaturen im Bereich von 50 bis 150 °C erfolgen.

Es wird eine ggf. fluorierte Polyurethan-Polymer-Hybrid-Dispersion mit verbesserten Oberflächeneigenschaften (niedrige kritische Oberflächenspannungen γ_{c} und sehr hohe Kontaktwinkel e) beschrieben, die erhältlich ist, durch
a) die Herstellung einer Dispersions-Komponente (Bindemittel) auf Basis einer wässrigen Lösung oder Dispersion eines ggf. hydroxy- und/oder aminofunktionellen Polyurethan-Polymer-Hybrids mit fluorierten Seitenketten sowie ggf.
b) die anschließende Umsetzung der Dispersions-Komponente aus Stufe a) mit einer Vernetzer-Komponente (D).

Die erfindungsgemäße Polyurethan-Polymer-Hybrid-Dispersion kann hierbei lösemittelfrei oder lösemittelarm und mit hohen Festkörpergehalten hergestellt werden und benötigt nur einen sehr geringen Bedarf an stabilisierenden Gruppen.

Die nachfolgenden Beispiele sollen die Erfindung näher veranschaulichen.

### Beispiele

### Beispiel 1

Die fluormodifizierte Polyurethan-Basis-Dispersion (1) mit einem polymer gebundenen Fluorgehalt von 0,64 Gew.-%, einem Festkörpergehalt von 38 Gew.-% und einem Lösemittelgehalt von 3,60 Gew.-% NMP wird im Reaktionsgefäß bei Raumtemperatur vorgelegt und unter gleichmäßigem Rühren mit Wasser (2) verdünnt. Anschließend werden n-Butylacrylat (3) und Methylmethacrylat (4) unter Rühren zugegeben. Die Initiator-Komponente 2,2'-Azoisobutyronitril (5) wird danach gut eingerührt. Sodann wird die Reaktionsmischung auf 80 bis 85°C aufgeheizt und bei dieser Temperatur für 5 Stunden gehalten. Anschließend wird die Dispersion auf 25°C abgekühlt. Es wird eine feinteilige opake Hybrid-Dispersion mit einem Feststoffgehalt von ca. 45 Gew.-% erhalten.

| | | |
|---|---|---|
| 1. | fluormodifizierte Polyurethan-Dispersion (A) | 400,00 g |
| 2. | Leitungswasser | 72,12 g |
| 3. | n-Butylacrylat | 20,27 g |
| 4. | Methylmethacrylat | 81,07 g |
| 5. | 2,2'-Azoisobutyronitril | 1,27 g |

### Beispiel 2

Die fluormodifizierte Polyurethan-Basis-Dispersion (1) mit einem polymer gebundenen Fluorgehalt von 0,64 Gew.-%, einem Festkörpergehalt von 38 Gew.-% und einem Lösemittelgehalt von 3,60 Gew.-% NMP wird im Reaktionsgefäß bei Raumtemperatur vorgelegt und unter gleichmäßigem Rühren mit Wasser (2) verdünnt. Anschließend werden 3,3,4,4,5,5,6,6,7,7,8,8,8-Tridecafluorooctylmethacrylat (3), Methylmethacrylat (4) und n-Butylacrylat (5) unter Rühren zugegeben. Die Initiator-Komponente 2,2'-Azoisobutyronitril (6) wird danach gut eingerührt. Sodann wird die Reaktionsmischung auf 80 bis 85 °C aufgeheizt und bei dieser Temperatur für 5 Stunden gehalten. Anschließend wird die Dispersion auf 25°C abgekühlt. Es wird eine feinteilige opake Hybrid-Dispersion mit einem Feststoffgehalt von ca. 45 Gew.-% erhalten.

| | | |
|---|---|---|
| 1. | fluormodifizierte Polyurethan-Dispersion (A) | 400,00 g |
| 2. | Leitungswasser | 18,40 g |
| 3. | 3,3,4,4,5,5,6,6,7,7,8,8,8-Tridecafluorooctylmethacrylat | 3,26 g |
| 4. | Methylmethacrylat | 55,37 g |
| 5. | n-Butylacrylat | 6,51 g |
| 6. | 2,2'-Azoisobutyronitril | 0,80 g |

### Beispiel 3

Die fluormodifizierte Polyurethan-Basis-Dispersion (1) mit einem polymer gebundenen Fluorgehalt von 0,64 Gew.-%, einem Festkörpergehalt von 38 Gew.-% und einem Lösemittelgehalt von 3,60 Gew.-% NMP wird im Reaktionsgefäß bei Raumtemperatur vorgelegt und unter gleichmäßigem Rühren mit Wasser (2) verdünnt. Anschließend werden 3-{3,5,7,9,11,13,15-Heptaisobutylpentacyclo [9.5.1.1 (3,9).1(5,15).1(7,13)]octasiloxan-1-yl}propylmethacrylat (C₃₅H₇₄0₁₄Si₈) (3), Methylmethacrylat (4) und n-Butylacrylat (5) separat gemischt und dann unter Rühren zugegeben. Die Initiator-Komponente 2,2'-Azoisobutyronitril (6) wird danach gut eingerührt. Sodann wird die Reaktionsmischung auf 80 bis 85 °C aufgeheizt und bei dieser Temperatur für 5 Stunden gehalten. Anschließend wird die Dispersion auf 25 ° C abgekühlt. Es wird eine feinteilige opake Hybrid-Dispersion mit einem Feststoffgehalt von ca. 45 Gew.-% erhalten.

| | | |
|---|---|---|
| 1. | Fluormodifizierte Polyurethan-Dispersion (A) | 400,00 g |
| 2. | Leitungswasser | 39,07 g |
| 3. | methacryloylfunktionelles POSS | 4,09 g |
| 4. | Methylmethacrylat | 69,57 g |
| 5 | n-Butylacrylat | 8,18 g |
| 6. | 2,2'-Azoisobutyronitril | 1,00 g |

### Beispiel 4

Die fluormodifizierte Polyurethan-Basis-Dispersion (1) mit einem polymer gebundenen Fluorgehalt von 0,64 Gew.-%, einem Festkörpergehalt von 38 Gew.-% und einem Lösemittelgehalt von 3,60 Gew.-% NMP wird im Reaktionsgefäß bei Raumtemperatur vorgelegt und unter gleichmäßigem Rühren mit Wasser (2) verdünnt. Anschließend werden 3,3,4,4,5,5,6,6,7,7,8,8,9,9,10,10,10-Heptadecafluorodecylmethacrylat (3), Methylmethacrylat (4) und n-Butylacrylat (5) unter Rühren zugegeben. Die Initiator-Komponente 2,2'-Azoisobutyronitril (6) wird danach gut eingerührt. Sodann wird die Reaktionsmischung auf 80 bis 85°C aufgeheizt und bei dieser Temperatur für 5 Stunden gehalten. Anschließend wird die Dispersion auf 25°C abgekühlt. Es wird eine feinteilige opake Hybrid-Dispersion mit einem Feststoffgehalt von ca. 45 Gew.-% erhalten.

| | | |
|---|---|---|
| 1. | fluormodifizierte Polyurethan-Dispersion (B) | 400,00 g |
| 2. | Leitungswasser | 18,19 g |
| 3. | 3,3,4,4,5,5,6,6,7,7,8,8,9,9,10,10,10-Heptadecafluorodecylmethacrylat | 3,26 g |
| 4. | Methylmethacrylat | 55,37 g |
| 5. | n-Butylacrylat | 6,51 g |
| 6. | 2,2'-Azoisobutyronitril | 0,80 g |

### Beispiel 5

Die Polyurethan-Basis-Dispersion (1) mit einem Festkörpergehalt von 40 Gew.-% und einem Lösemittelgehalt von 3,73 Gew.-% NMP wird im Reaktionsgefäß bei Raumtemperatur vorgelegt und unter gleichmäßigem Rühren mit Wasser (2) verdünnt. Anschließend werden 3,3,4,4,5,5,6,6,7,7,8,8,8-Tridecafluorooctylmethacrylat (3), Methylmethacrylat (4) und n-Butylacrylat (5) unter Rühren zugegeben. Die Initiator-Komponente 2,2'-Azoisobutyronitril (6) wird danach gut eingerührt. Sodann wird die Reaktionsmischung auf 80 bis 85°C aufgeheizt und bei dieser Temperatur für 5 Stunden gehalten. Anschließend wird die Dispersion auf 25°C abgekühlt. Es wird eine feinteilige opake Hybrid-Dispersion mit einem Feststoffgehalt von ca. 45 Gew.-% erhalten.

| | | |
|---|---|---|
| 1. | Polyurethan-Dispersion (B) | 400,00 g |
| 2. | Leitungswasser | 87,56 g |
| 3. | 3,3,4,4,5,5,6,6,7,7,8,8,8-Tridecafluorooctylmethacrylat | 4,09 g |
| 4. | Methylmethacrylat | 67,11 g |
| 5. | n-Butylacrylat | 10,64 g |
| 6. | 2,2'-Azoisobutyronitril | 1,34 g |

### Beispiel 6

Die Polyurethan-Basis-Dispersion (1) mit einem Festkörpergehalt von 40 Gew.-% und einem Lösemittelgehalt von 3,73 Gew.-% NMP wird im Reaktionsgefäß bei Raumtemperatur vorgelegt und unter gleichmäßigem Rühren mit Wasser (2) verdünnt. Anschließend werden 3-{3,5,7,9,11,13,15-Heptaisobutypentacyclo [9.5.1.1 (3,9).1(5,15).1(7,13)]octasiloxan-1-yl}propylmethacrylat (C₃₅H₇₄O₁₄Si₈) (3), Methylmethacrylat (4) und 3,3,4,4,5,5,6,6,7,7,8,8,8-Tridecafluorooctylmethacrylat (5) separat gemischt und dann unter Rühren zugegeben. Die Initiatorkomponente 2,2'-Azoisobutyronitril (6) wird danach gut eingerührt. Sodann wird die Reaktionsmischung auf 80 bis 85°C aufgeheizt und bei dieser Temperatur für 5 Stunden gehalten. Anschließend wird die Dispersion auf 25°C abgekühlt. Es wird eine feinteilige opake Hybrid-Dispersion mit einem Feststoffgehalt von ca. 45 Gew.-% erhalten.

| | | |
|---|---|---|
| 1. | Polyurethan-Dispersion (B) | 400,00 g |
| 2. | Leitungswasser | 40,37 g |
| 3. | methacryloylfunktionelles POSS | 2,74 g |
| 4. | Methylmethacrylat | 60,34 g |
| 5. | 3,3,4,4,5,5,6,6,7,7,8,8,8-Tridecafluorooctylmethacrylat | 5,49 g |
| 6. | 2,2'-Azoisobutyronitril | 0,81 g |

### Beispiel 7

Die Polyurethan-Basis-Dispersion (1) mit einem Festkörpergehalt von 40 Gew.-% und einem Lösemittelgehalt von 3,73 Gew.-% NMP wird im Reaktionsgefäß bei Raumtemperatur vorgelegt und unter gleichmäßigem Rühren mit Wasser (2) verdünnt. Anschließend werden 3,3,4,4,5,5,6,6,7,7,8,8,9,9,10,10,10-Heptadecafluorodecylmethacrylat (3), Methylmethacrylat (4) und n-Butylacrylat (5) unter Rühren zugegeben. Die Initiatorkomponente 2,2'-Azoisobutyronitril (6) wird danach gut eingerührt. Sodann wird die Reaktionsmischung auf 80 bis 85°C aufgeheizt und bei dieser Temperatur für 5 Stunden gehalten. Anschließend wird die Dispersion auf 25°C abgekühlt. Es wird eine feinteilige opake Hybrid-Dispersion mit einem Feststoffgehalt von ca. 45 Gew.-% erhalten.

| | | |
|---|---|---|
| 1. | Polyurethan-Dispersion (B) | 400,00 g |
| 2. | Leitungswasser | 87,19 g |
| 3. | 3,3,4,4,5,5,6,6,7,7,8,8,9,9,10,10,10-eptadecafluorodecylmethacrylat | 7,47 g 7,47 g |
| 4. | Methylmethacrylat | 87,47 g |
| 4. | n-Butylacrylat | 11,73 g |
| 5. | 2,2'-Azoisobutyronitril | 1,04 g |

## Patentansprüche

1. Polyurethan-Polymer-Hybrid-Dispersion, erhältlich durch
a) Herstellung einer Dispersions-Komponente bzw. einer Bindemittel-Komponente auf Basis einer wässrigen Lösung oder Dispersion eines ggf. hydroxy- und/oder aminofunktionellen Polyurethan-Polymer-Hybrids mit fluorierten Seitenketten, wobei man
a₁) 5 bis 100 Gewichtsteile einer lateral fluormodifizierten anionisch stabilisierten Polyurethan-Basis-Dispersion (A) mit bevorzugt ideal linear segmentierter Struktur, einem polymer gebundenem Fluorgehalt von bis 5 Gew.-%, einer Hydroxylzahl und/oder Aminzahl von 0 bis 250 mgKOH/g, einem Festkörpergehalt von 20 bis 60 Gew.-%, einem Lösemittelgehalt von 0 bis 20 Gew.-% und einer mittleren Molmasse von 5 000 bis 100 000 Dalton mit einem Gemisch aus 3 bis 300 Gewichtsteilen einer Monomer-Komponente (B), bestehend aus
(i) 1 bis 100 Gewichtsteilen eines oder mehrerer ungesättigter Monomere (B)(i) mit einer oder mehreren radikalisch polymerisierbaren Doppelbindungen ausgewählt aus den Gruppen Acrylsäure und deren Derivate und/oder Methacrylsäure und deren Derivate und/oder Styrol und dessen Derivate
und/oder
(ii) 1 bis 100 Gewichtsteilen eines oder mehrerer ungesättigter fluormodifizierter Monomere (B)(ii) mit einer oder mehreren radikalisch polymerisierbaren Doppelbindungen ausgewählt aus den Gruppen der Alkyl(per)fluoro(meth)acrylate und/oder (Per)fluoroalkyl(meth)acrylate und/oder (Per)fluoroalkyl-(per)fluoro(meth)acrylate und/oder Umsetzungsprodukte aus 1-(1-isocyanato-1-methyl-ethyl)-3-(2-propenyl)-benzol (m-TMI) und Perfluoroalkylalkoholen
und/oder
(iii) 1 bis 100 Gewichtsteilen eines oder mehrerer ungesättigter ggf. fluormodifizierter Monomere (B)(iii) mit einer oder mehreren radikalisch polymerisierbaren Doppelbindungen ausgewählt aus der Gruppe der reaktiven polyhedralen oligomeren Polysilasesquioxane (POSS) der allgemeinen Formel (RSiO_{1.5})ₙ mit n = 4, 6, 8, 10, 12 und R = organischer Rest mit 1 bis 100 C-Atomen und 0 bis 50 N- und/oder 0 bis 50 O- und/oder 0 bis 50 F- und/oder 0 bis 50 Si- und/oder 0 bis 50 S-Atomen und einer Molmasse von 250 bis 25 000 Dalton,
mit 0.01 bis 10 Gewichtsteilen einer Initiator-Komponente (C), bestehend aus mindestens einem lipophilen Radikalinitiator mit einer oder mehreren thermisch labilen Azo- oder Peroxo-Gruppen sowie 0 bis 200 Gewichtsteilen Wasser versetzt, wobei die Monomer-Komponente (B), die Initiator-Komponente (C) und das Wasser gleichzeitig, nacheinander oder im Gemisch der Polyurethan-Basis-Dispersion (A) zudosiert werden können und anschließend
a₂) im Reaktionsgemisch aus Stufe a₁) durch den thermischen Zerfall der Komponente (C) eine radikalische Polymerisation der Komponente (B) innerhalb der Mizellen der Polyurethan-Basis-Dispersion (A) durchführt
sowie ggf. durch
b) die anschließende Umsetzung der Dispersions- bzw. Bindemittel-Komponente aus den Komponenten (A) bis (C) aus der Stufe a₂) mit 20 bis 100 Gewichtsteilen einer Vernetzer-Komponente (D) (Härter), wobei als Vernetzer-Komponente (D) wasserdispergierbare (Lack-)Polyisocyanate mit aliphatisch und/oder cycloaliphatisch und/oder aromatisch gebundenen Isocyanat-Gruppen eingesetzt werden, welche 0 bis 25 Gew.-% eines organischen Lösemittels enthalten können.

2. Polyurethan-Polymer-Hybrid-Dispersion nach Anspruch 1, **dadurch gekennzeichnet, dass** als Komponente (A) ggf. hydroxy- und/oder aminofunktionalisierte Polyurethan-Dispersionen auf Basis von (hydrophob modifizierten) Polyalkylenglykolen, aliphatischen oder aromatischen Polyestern, Polycaprolactonen, Polycarbonaten, α,ω-Polybutadienpolyolen, α,ω-Polymethacrylatdiolen, α,ω-Dihydroxyalkylpolydimethylsiloxanen, Makromonomeren, Telechelen, hydroxyfunktionellen Epoxid-Harzen, oxidativ trocknender Alkydharzen auf Basis von Bisepoxiden und ungesättigten Fettsäuren, hydroxyfunktionellen Polysulfiden oder Gemischen daraus eingesetzt werden.

3. Polyurethan-Polymer-Hybrid-Dispersion nach Anspruch 1, **dadurch gekennzeichnet, dass** als Komponente (A) Polyurethan-Dispersionen eingesetzt werden, die als Baugruppen lateral fluormodizierte Makromonomere auf Basis von Umsetzungsprodukten aus
a) Perfluoroalkylalkoholen, Diisocyanaten und Diethanolamin, wobei vorzugsweise Perfluoralkylalkohole mit terminalen Methylen-Gruppen (Kohlenwasserstoff-Spacern) der allgemeinen Formel
CF₃-(CF₂)ₓ-(CH₂)_{y}-OH,
mit x=3-20 und y=1-6
oder Hexafluorpropenoxid (HFPO)-Oligomer-Alkohole der allgemeinen Formel
CF₃CF₂CF₂O-(CF(CF₃)CF₂O)_{z}-CF(CF₃)CH₂-OH,
mit z = 1 - 10
oder aber Gemische aus diesen eingesetzt werden,
und/oder
b) Perfluoroalkylalkenen und Diethanolamin, wobei vorzugsweise Perfluoralkylalkene mit terminalen Methylen-Gruppen (Kohlenwasserstoff-Spacem) der allgemeinen Formel
CF₃-(CF₂)ₓ-CH₂=CH₂,
mit x = 3 - 20
oder aber Gemische aus diesen eingesetzt werden,
und/oder
c) Alkyl(per)fluoro(meth)acrylaten und/oder (Per)fluoroalkyl(meth)acrylaten und/oder (Per)fluoroalkyl-(per)fluoro(meth)acrylaten und Diethanolamin
und/oder
d) (Per)fluoroalkylalkylenoxiden und N-Methylethanolamin oder Diethanolamin
enthalten.

4. Polyurethan-Polymer-Hybrid-Dispersion nach einem der Ansprüche 1 bis 3, **dadurch gekennzeichnet, dass** als Komponente (B)(iii) reaktive polyhedrale oligomere Polysilasesquioxane (POSS) der allgemeinen Formel (RSiO_{1.5})₈ mit R = Methacryloyloxypropyl und ggf. CH₂CH₂CF₂CF₂CF₂CF₂CF₂CF₃ und/oder H und/oder C₁-C₂₅-Alkyl und/oder C₃-C₂₅-Cycloalkyl und/oder C₆-C₃₀-Aryl und/oder (CH₂)₃(OCH₂CH₂)ₙOMe und/oder Aminopropyl und/oder Epoxypropyl und/oder Dimethoxysilyloxy und/oder Isocyanatopropyl und/oder Triethoxysilylpropyl eingesetzt werden.

5. Polyurethan-Polymer-Hybrid-Dispersion nach einem der Ansprüche 1 bis 4, **dadurch gekennzeichnet, dass** als Komponente (B)(iii) reaktive polyhedrale oligomere Polysilasesquioxane (POSS) der allgemeinen Formel
(RₐX_{b}SiO_{1,5})ₘ
verwendet werden,
wobei
a = 0 oder 1,
b = 0 oder 1,
a + b = 1,
m = 2, 6, 8, 10, 12 sowie
R = Wasserstoffatom, Alkyl-, Cycloalkyl-, Alkenyl-, Cycloalkenyl-, Alkinyl-, Cycloalkinylgruppe oder Polymereinheit, die jeweils substituiert oder unsubstituiert sind oder weitere funktionalisierte polyedrische oligomere Silizium-Sauerstoffclustereinheiten, die über eine Polymereinheit oder eine Brückeneinheit angebunden sind,
X = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphin-, Polyethergruppe oder mindestens eine solche Gruppe vom Typ X aufweisenden Substituenten vom Typ R,
bedeuten und sowohl die Substituenten vom Typ R als auch die Substituenten vom Typ X gleich oder unterschiedlich sind.

6. Polyurethan-Polymer-Hybrid-Dispersion nach einem der Ansprüche 1 bis 5, **dadurch gekennzeichnet, dass** als Komponente (C) ein Radikal-Initiator eingesetzt wird, der bei einer Zerfallstemperatur im Bereich von 40 bis 120°C eine Halbwertszeit von 1 Stunde aufweist.

7. Polyurethan-Polymer-Hybrid-Dispersion nach einem der Ansprüche 1 bis 6, **dadurch gekennzeichnet, dass** als Komponente (C) 2,2'-Azobis(2-methylbutyronitril) und/oder 2,2'-Azobis(2-methylpropionitril) eingesetzt wird.

8. Polyurethan-Polymer-Hybrid-Dispersion nach einem der Ansprüche 1 bis 7, **dadurch gekennzeichnet, dass** das Initiator/Monomer-Molverhältnis der Komponenten (B) und (C) auf einen Wert von 0,001 bis 0,05 eingestellt wird.

9. Polyurethan-Polymer-Hybrid-Dispersion nach einem der Ansprüche 1 bis 8, **dadurch gekennzeichnet, dass** im anionisch modifizierten Polyurethan-Hybrid-Polymer aus den Komponenten (A) bis (C) der Gehalt an Carboxylat- und/oder Sulfonat-Gruppen auf 5 bis 25 meq·(100 g)⁻¹, vorzugsweise auf 10 bis 20 meq· (100 g)⁻¹, und die Säurezahl auf 2,5 bis 15 meq KOH·g⁻¹, vorzugsweise auf 5 bis 12,5 meq KOH·g⁻¹, eingestellt wird.

10. Polyurethan-Polymer-Hybrid-Dispersion nach einem der Ansprüche 1 bis 9, **dadurch gekennzeichnet, dass** der Festkörper-Gehalt an fluormodifiziertem Polyurethan-Hybrid-Polymer bestehend aus den Komponenten (A) bis (C), auf 30 bis 70 Gew.-%, vorzugsweise auf 40 bis 60 Gew.-%, bezogen auf die Gesamtmenge der Polyurethan-Polymer-Hybrid-Dispersion eingestellt wird.

11. Polyurethan-Polymer-Hybrid-Dispersion nach einem der Ansprüche 1 bis 10, **dadurch gekennzeichnet, dass** das Verhältnis der anteiligen Festkörper-Gehalte aus (fluormodifiziertem) Polyurethan-Harz aus der Komponente (A) und (fluormodifiziertem) Polymer-Harz aus den Komponenten (B) und (C) auf 20 zu 80 bis 80 zu 20 Gew.-%, vorzugsweise auf 40 zu 60 bis 60 zu 40 Gew.-%, eingestellt wird.

12. Polyurethan-Polymer-Hybrid-Dispersion nach einem der Ansprüche 1 bis 11, **dadurch gekennzeichnet, dass** die Polyurethan-Dispersionen oder Polyurethan-Polymer-Hybrid-Dispersionen weniger als 10 Gew.-% an organischen Lösemitteln enthalten.

13. Polyurethan-Polymer-Hybrid-Dispersion nach einem der Ansprüche 1 bis 12, **dadurch gekennzeichnet, dass** die mittlere Partikelgröße der Mizellen 50 bis 500 nm, vorzugsweise 100 bis 400 nm, beträgt.

14. Polyurethan-Polymer-Hybrid-Dispersion nach einem der Ansprüche 1 bis 13, **dadurch gekennzeichnet, dass** die mittlere Molmasse (Zahlenmittel) 50 000 bis 500 000 Dalton beträgt.

15. Polyurethan-Polymer-Hybrid-Dispersion nach einem der Ansprüche 1 bis 14, **dadurch gekennzeichnet, dass** das Verhältnis von Vernetzer-Komponente (D) zur Bindemittel-Komponente aus den Komponenten (A) bis (C) 1 : 3 bis 1 : 5 beträgt.

16. Verfahren zur Herstellung der Polyurethan-Polymer-Hybrid-Dispersion nach einem der Ansprüche 1 bis 15, **dadurch gekennzeichnet, dass** eine Dispersions-Komponente hergestellt wird, indem man
a₁) eine fluormodizierte Polyurethan-Basis-Dispersion (A) ggf. mit Wasser verdünnt und mit einem vorgefertigten Gemisch der Komponenten (B) und (C) sowie mit Wasser versetzt, wobei die Monomer-Komponente (B) oder deren Einzelbestandteile, die Initiator-Komponente (C) und das Wasser gleichzeitig, nacheinander oder im Gemisch der Polyurethan-Basis-Dispersion (A) zudosiert werden können und schließlich
a₂) durch den thermischen Zerfall der Komponente (C) eine radikalische Polymerisation der Komponente (B) durchführt
sowie ggf. durch
b) die Bindemittel-Komponente aus den Komponenten (A) bis (C) aus Stufe a₂) anschließend mit 20 bis 100 Gewichtsteilen einer Vernetzer-Komponente (D) umsetzt.

17. Verfahren nach Anspruch 16, **dadurch gekennzeichnet, dass** die Reaktionsstufe a₁) bei einer Temperatur von 15 bis 35 °C, vorzugsweise bei 20 bis 30 °C, durchgeführt wird.

18. Verfahren nach einem der Ansprüche 16 bis 17, **dadurch gekennzeichnet, dass** die Reaktionsstufe a₂) bei einer Temperaturdifferenz von ± 10 °C bezogen auf die Temperatur, bei der die Komponente (C) eine Halbwertszeit von 1 Stunde aufweist, durchgeführt wird.

19. Verfahren nach einem der Ansprüche 16 bis 18, **dadurch gekennzeichnet, dass** die Reaktionsstufe a₂) vorzugsweise bei einer Temperatur von 80 ± 10 °C bei Verwendung von 2,2'-Azobisisobutyronitril als Komponente (C) durchgeführt wird.

20. Verfahren nach einem der Ansprüche 16 bis 19, **dadurch gekennzeichnet, dass** die radikalische Polymerisation in der Reaktionsstufe a₂) ohne weitere Emulgatoren durchgeführt wird.

21. Verfahren nach einem der Ansprüche 16 bis 20, **dadurch gekennzeichnet, dass** die Reaktionsstufe b) bei einer Temperatur von 15 bis 35 °C, vorzugsweise bei 20 bis 30 °C, durchgeführt wird.

22. Verwendung der Polyurethan-Polymer-Hybrid-Dispersion nach einem der Ansprüche 1 bis 15, **dadurch gekennzeichnet, dass** sie in ein- oder zweikomponentiger Form eingesetzt wird.

23. Verwendung der Polyurethan-Polymer-Hybrid-Dispersion nach Anspruch 22, **dadurch gekennzeichnet, dass** bei zweikomponentiger Applikation formulierte oder unformulierte Polyurethan-Polymer-Hybrid-Dispersion als Bindemittel-Komponente und wasseremulgierbare (Lack-)Polyisocyanate als Härter-Komponente eingesetzt werden.

24. Verwendung der Polyurethan-Polymer-Hybrid-Dispersion einem der Ansprüche 22 oder 23 im Bau- oder Industriebereich zur permanenten öl- und wasserabweisenden Oberflächenbehandlung bzw. -modifizierung von mineralischen und nichtmineralischen Untergründen, wie
a) Anorganische Oberflächen,
wie z.B. poröse, saugende, raue und polierte Baumaterialien und Bauwerkstoffe aller Art (wie z. B. Beton, Gips, Kieselsäure und Silikate, Kunststein, Naturstein (wie z. B. Granit, Marmor, Sandstein, Schiefer, Serpentin), Ton, Zement, Ziegel) sowie Emaille, Füllstoffe und Pigmente, Glas, Keramik, Metalle und Metalllegierungen,
b) Organische Oberflächen,
wie z. B. Holz und Holzwerkstoffe, Holzfurnier, glasfaserverstärkte Kunststoffe (GFK), Kunststoffe, Leder, Naturfasern, polare organische Polymere aller Art, Verbundmaterialien.

25. Verwendung der Polyurethan-Polymer-Hybrid-Dispersion nach einem der Ansprüche 22 bis 24 zur permanenten öl- und wasserabweisenden Oberflächenbehandlung bzw. -modifizierung von mineralischen und nichtmineralischen Untergründen in den Anwendungsbereichen
Bau, wie z. B.
• Antigraffiti / Antisoiling Coatings ,
• Easy-To-Clean Coatings,
• weitere Beschichtungen aller Art (wie z. B. Balkonbeschichtungen, Dach (ziegel)beschichtungen, Einbrennlacke, Farben und Lacke, Fassadenfarben, Bodenbeschichtungen, leicht-, mittel und hochbelastbare Industrieböden, Parkdeckbeschichtungen, Sportböden),
• Abdichtungen,
• Betonfertigteile,
• Betonformteile,
• Fliese und Fuge,
• Kleb- und Dichtstoffe,
• Lärmschutzwände,
• Korrosionsschutz,
• Putze und Dekorputze,
• Wärmedämmverbundsysteme (WDVS) und Wärmedämmsysteme (WDS)
sowie
Nichtbau und Industrie, wie z. B.
• Automobilindustrie,
• Coil Coatings,
• Einbrennlacke,
• Glasfassaden und Glasoberflächen,
• Keramik und Sanitärkeramik,
• Lederzurichtung,
• oberflächenmodifizierte Füllstoffe und Pigmente,
• Papierbeschichtung,
• Rotoren von Windkraftanlagen,
• Schiffsfarben.

## Claims

1. Polyurethane-polymer hybrid dispersion obtainable by
a) preparing a dispersion component or binder component based on an aqueous solution or dispersion of an optionally hydroxy- and/or amino-functional polyurethane-polymer hybrid having fluorinated side chains, where
a₁) 5 to 100 parts by weight of a laterally fluorine-modified, anionically stabilized polyurethane base dispersion (A) having preferably an ideally linearly segmented structure, a polymer-bonded fluorine content of up to 5% by weight, a hydroxyl number and/or amine number of 0 to 250 mg KOH/g, a solids content of 20% to 60% by weight, a solvent content of 0 to 20% by weight, and an average molar mass of 5000 to 100 000 daltons are admixed with 3 to 300 parts by weight of a monomer component (B) consisting of
(i) 1 to 100 parts by weight of one or more unsaturated monomers (B) (i) having one or more free-radically polymerizable double bonds, selected from the groups of acrylic acid and its derivatives and/or methacrylic acid and its derivatives and/or styrene and its derivatives
and/or
(ii) 1 to 100 parts by weight of one or more unsaturated fluorine-modified monomers (B) (ii) having one or more free-radically polymerizable double bonds, selected from the groups of alkyl (per)fluoro (meth)acrylates and/or (per)fluoroalkyl (meth)acrylates and/or (per)fluoroalkyl (per)fluoro(meth)acrylates and/or reaction products of 1-(1-isocyanato-1-methylethyl)-3-(2-propenyl)benzene (m-TMI) and perfluoroalkyl alcohols
and/or
(iii) 1 to 100 parts by weight of one or more unsaturated (optionally fluorine-modified) monomers (B)(iii) having one or more free-radically polymerizable double bonds, selected from the group of polyhedral oligomeric polysilsesquioxanes (POSS) of the general formula (RSiO_{1.5})ₙ with n = 4, 6, 8, 10, 12 and R = any organic radical having 1 to 100 C atoms and 0 to 50 N and/or O and/or F and/or Si and/or S atoms and a molar mass of 250 to 25 000 daltons,
with 0.01 to 10 parts by weight of an initiator component (C), consisting of at least one lipophilic free-radical initiator having one or more thermally labile azo or peroxo groups, and 0 to 200 parts by weight of water, it being possible for the monomer component (B), the initiator component (C), and the water to be metered in simultaneously, successively or in a mixture to the polyurethane base dispersion (A), and subsequently
a₂) in the reaction mixture from stage a₁), as a result of the thermal decomposition of component (C), carrying out a free-radical polymerization of component (B) within the micelles of the polyurethane base dispersion (A),
and, if desired,
b) subsequently reacting the dispersion or binder component formed from components (A) to (C) from stage a₂) with 20 to 100 parts by weight of a crosslinker component or curing agent (D), use being made as crosslinker component or curing agent (D) of water-dispersible (paint) polyisocyanates having aliphatically and/or cycloaliphatically and/or aromatically attached isocyanate groups, it being possible for these polyisocyanates to contain 0 to 25% by weight of an organic solvent.

2. Polyurethane-polymer hybrid dispersion of Claim 1, **characterized in that** as component (A) use is made of optionally hydroxy- and/or amino-functionalized polyurethane dispersions based on (hydrophobically modified) polyalkylene glycols, aliphatic or aromatic polyesters, polycaprolactones, polycarbonates, α,ω-polybutadienepolyols, α,ω-polymethacrylatediols, α,ω-dihydroxyalkylpolydimethylsiloxanes, macromonomers, telecheles, hydroxy-functional epoxy resins, oxidatively drying alkyd resins based on bisepoxides and unsaturated fatty acids, hydroxy-functional polysulfides or mixtures thereof.

3. Polyurethane-polymer hybrid dispersion of Claim 1, **characterized in that** as component (A) use is made of polyurethane dispersions which as structural groups laterally fluorine-modified macromonomers based on reaction products of
a) perfluoroalkyl alcohols, diisocyanates, and diethanolamine, use being made preferably of perfluoroalkyl alcohols having terminal methylene groups (hydrocarbon spacers) of the general formula
CF₃- (CF₂) ₓ- (CH₂) _{y}-OH,
with x = 3-20 and y = 1-6
or hexafluoropropene oxide (HFPO) oligomer alcohols of the general formula
CF₃CF₂CF₂O- (CF (CF₃) CF₂O) _{z}-CF (CF₃) CH₂-OH
with z = 1-10
or else mixtures of these,
and/or
b) perfluoroalkylalkenes and diethanolamine, use being made preferably of perfluoroalkylalkenes having terminal methylene groups (hydrocarbon spacers) of the general formula
CF₃- (CF₂) ₓ-CH₂=CH₂
with x = 3-20
or else mixtures of these,
and/or
c) alkyl (per) fluoro (meth) acrylates and/or (per)fluoroalkyl (meth)acrylates and/or (per) fluoroalkyl (per) fluoro (meth) acrylates and diethanolamine
and/or
d) (per)fluoroalkylalkene oxides and N-methylethanolamine or diethanolamine.

4. Polyurethane-polymer hybrid dispersion of any one of Claims 1 to 3, **characterized in that** as component (B)(iii) use is made of reactive polyhedral oligomeric polysilsesquioxanes (POSS) of the general formula (RSiO_{1.5}) ₈ with R = methacryloyloxypropyl and optionally CH₂CH₂CF₂CF₂CF₂CF₂CF₂CF₃ and/or H and/or C₁-C₂₅ alkyl and/or C₃-C₂₅ cycloalkyl and/or C₆-C₃₀ aryl and/or (CH₂) ₃ (OCH₂CH₂) ₙOMe and/or aminopropyl and/or epoxypropyl and/or dimethoxysilyloxy and/or isocyanatopropyl and/or triethoxysilylpropyl.

5. Polyurethane-polymer hybrid dispersion of any one of Claims 1 to 4, **characterized in that** as component (B)(iii) use is made of reactive polyhedral oligomeric polysilsesquioxanes (POSS) of the general formula
(RₐX_{b}SiO_{1.5}) ₘ
where
a = 0 or 1,
b = 0 or 1,
a + b = 1,
m = 2, 6, 8, 10, 12, and
R = hydrogen atom, alkyl, cycloalkyl, alkenyl, cycloalkenyl, alkynyl or cycloalkynyl group or polymer unit, each of which are substituted or unsubstituted, or further functionalized polyhedral oligomeric silicon-oxygen cluster units, which are attached via a polymer unit or a bridging unit,
X = oxy, hydroxy, alkoxy, carboxy, silyl, alkylsilyl, alkoxysilyl, siloxy, alkylsiloxy, alkoxysiloxy, silylalkyl, alkoxysilylalkyl, alkylsilylalkyl, halogen, epoxy, ester, fluoroalkyl, isocyanate, blocked isocyanate, acrylate, methacrylate, nitrile, amino, phosphine or polyether group or substituents of type R containing at least one such group of type X,
and the substituents of type R and also the substituents of type X being identical or different.

6. Polyurethane-polymer hybrid dispersion of any one of Claims 1 to 5, **characterized in that** as component (C) use is made of a free-radical initiator which has a half-life of one hour at a decomposition temperature in the range from 40 to 120°C.

7. Polyurethane-polymer hybrid dispersion of any one of Claims 1 to 6, **characterized in that** as component (C) use is made of 2,2'-azobis(2-methylbutyronitrile) and/or 2,2'-azobis(2-methylpropionitrile).

8. Polyurethane-polymer hybrid dispersion of any one of Claims 1 to 7, **characterized in that** the initiator/monomer molar ratio of components (B) and (C) is set at a level of 0.001 to 0.05.

9. Polyurethane-polymer hybrid dispersion of any one of Claims 1 to 8, **characterized in that** in the anionically modified polyurethane hybrid polymer formed from components (A) to (C) the amount of carboxylate and/or sulfonate groups is set at 5 to 25 meq· (100 g)⁻¹, preferably at 10 to 20 meq· (100 g)⁻¹, and the acid number at 2.5 to 15 meq KOH · g⁻¹, preferably at 5 to 12.5 meq KOH-g⁻¹.

10. Polyurethane-polymer hybrid dispersion of any one of Claims 1 to 9, **characterized in that** the solids content in terms of fluorine-modified polyurethane hybrid polymer consisting of components (A) to (C) is set at 30% to 70% by weight, preferably at 40% to 60% by weight, based on the total amount of the polyurethane-polymer hybrid dispersion.

11. Polyurethane-polymer hybrid dispersion of any one of Claims 1 to 10, **characterized in that** the ratio of the proportional solids contents of (fluorine-modified) polyurethane resin from component (A) and (fluorine-modified) polymer resin from components (B) and (C) is set at 20%:80% to 80%:20% by weight, preferably at 40%:60% to 60%:40% by weight.

12. Polyurethane-polymer hybrid dispersion of any one of Claims 1 to 11, **characterized in that** the polyurethane dispersions or polyurethane-polymer hybrid dispersions contain less than 10% by weight of organic solvents.

13. Polyurethane-polymer hybrid dispersion of any one of Claims 1 to 12, **characterized in that** the average particle size of the micelles amounts to 50 to 500 nm, preferably 100 to 400 nm.

14. Polyurethane-polymer hybrid dispersion of any one of Claims 1 to 13, **characterized in that** the average molar mass (number average) amounts to 50 000 to 500 000 daltons.

15. Polyurethane-polymer hybrid dispersion of any one of Claims 1 to 14, **characterized in that** the ratio of crosslinker component (D) to the binder component comprising components (A) to (C) is 1:3 to 1:5.

16. Method of preparing the polyurethane-polymer hybrid dispersion of any one of claims 1 to 15, **characterized in that** a dispersion component is prepared by
a₁) optionally diluting a fluorine-modified polyurethane base dispersion (A) with water and admixing it with a pre-prepared mixture of components (B) and (C) and also with water, it being possible to meter in the monomer component (B) or its individual constituents, the initiator component (C), and the water simultaneously, successively or in a mixture to the polyurethane base dispersion (A), and finally
a₂) carrying out a free-radical polymerization of component (B) by means of the thermal decomposition of component (C),
and also, if desired, by
b) reacting the binder component formed from components (A) to (C) from stage a₂) subsequently with 20 to 100 parts by weight of a crosslinker component (D).

17. Method of Claim 16, **characterized in that** reaction stage a₁) is carried out at a temperature of 15 to 35°C, preferably at 20 to 30°C.

18. Method of either one of Claims 16 and 17, **characterized in that** reaction stage a₂) is carried out at a temperature difference of ±10°C relative to the temperature at which component (C) has a half-life of 1 hour.

19. Method of any one of Claims 16 to 18, **characterized in that** reaction stage a₂) is carried out preferably at a temperature of 80 ± 10°C when using 2,2'-azobisisobutyronitrile as component (C).

20. Method of any one of Claims 16 to 19, **characterized in that** the free-radical polymerization in reaction stage a₂) is carried out without further emulsifiers.

21. Method of any one of Claims 16 to 20, **characterized in that** reaction stage b) is carried out at a temperature of 15 to 35°C, preferably at 20 to 30°C.

22. Utilization of the polyurethane-polymer hybrid dispersion of any one of Claims 1 to 15, **characterized in that** it is used in one-component or two-component form.

23. Utilization of the polyurethane-polymer hybrid dispersion of Claim 22, **characterized in that**, in the case of two-component application, formulated or unformulated polyurethane-polymer hybrid dispersion is used as binder component and water-emulsifiable (paint) polyisocyanates are used as curing component.

24. Utilization of the polyurethane-polymer hybrid dispersion of either one of Claims 22 and 23 in the construction or industrial sector for the permanent oil- and water-repellent surface treatment or modification of mineral and nonmineral substrates, such as
a) inorganic surfaces,
such as porous, absorbent, rough, and polished building materials and construction materials of all kinds (such as concrete, gypsum, silica and silicates, artificial stone, natural stone (such as granite, marble, sandstone, slate, and serpentine), clay, cement, brick) and also enamels, fillers and pigments, glass, ceramic, and metals and metal alloys,
b) organic surfaces,
such as wood and woodbase materials, wood veneer, glass fiber-reinforced plastics (GRP), plastics, leather, natural fibers, polar organic polymers of all kinds, and composite materials.

25. Utilization of the polyurethane-polymer hybrid dispersion of any one of Claims 22 to 24 for permanent oil- and water-repellent surface treatment or modification of mineral and nonmineral substrates in the application fields of
construction, such as
• antigraffiti/antisoiling coatings,
• easy to clean coatings,
• other coatings of all kinds (such as balcony coatings, roof (shingle) coatings, baking varnishes, inks and paints, masonry paints, floor coatings, light-, medium- and high-duty industrial floors, car park surfacings, sports floors),
• seals,
• prefabricated concrete components,
• concrete moldings,
• tiles and joints,
• adhesives and sealants,
• soundproofing walls,
• corrosion control,
• renders and decorative plasters,
• exterior insulation and finishing systems (EIFS) and exterior insulation systems (EIS),
and also
non-construction and industrial, such as
• automobile industry,
• coil coatings,
• baking varnishes,
• glass frontages and glass surfaces,
• ceramics, including sanitary ceramics,
• leather dressing,
• surface-modified fillers and pigments,
• paper coating,
• rotors of wind turbines,
• marine paints.

## Revendications

1. Dispersion hybride polyuréthane-polymère, pouvant être obtenue par
a) la fabrication d'un composant dispersion ou d'un composant liant à base d'une solution ou dispersion aqueuse d'un hybride polyuréthane-polymère éventuellement à fonction hydroxy et/ou amino contenant des chaînes latérales fluorées, selon laquelle
a₁) 5 à 100 parties en poids d'une dispersion de base de polyuréthane stabilisée anioniquement et modifiée latéralement par du fluor (A), ayant de préférence une structure segmentée linéaire idéale, une teneur en fluor relié au polymère de jusqu'à 5 % en poids, un indice hydroxyle et/ou un indice d'amine de 0 à 250 mg de KOH/g, une teneur en solides de 20 à 60 % en poids, une teneur en solvant de 0 à 20 % en poids et une masse molaire moyenne de 5 000 à 100 000 Daltons, sont mélangées avec un mélange de 3 à 300 parties en poids d'un composant monomère (B), constitué par
(i) 1 à 100 parties en poids d'un ou de plusieurs monomères insaturés (B)(i) contenant une ou plusieurs doubles liaisons polymérisables par voie radicalaire choisis dans les groupes de l'acide acrylique et ses dérivés et/ou de l'acide méthacrylique et ses dérivés et/ou du styrène et ses dérivés
et/ou
(ii) 1 à 100 parties en poids d'un ou de plusieurs monomères insaturés modifiés par du fluor (B)(ii) contenant une ou plusieurs doubles liaisons polymérisables par voie radicalaire choisis dans les groupes des (per)fluoro(méth)acrylates d'alkyle et/ou des (méth)acrylates de (per)fluoroalkyle et/ou des (per)fluoro(méth)acrylates de (per)fluoroalkyle et/ou des produits de réaction de 1-(1-isocyanato-1-méthyl-éthyl)-3-(2-propényl)-benzène (m-TMI) et d'alcools perfluoroalkyliques
et/ou
(iii) 1 à 100 parties en poids d'un ou de plusieurs monomères insaturés éventuellement modifiés par du fluor (B)(iii) contenant une ou plusieurs doubles liaisons polymérisables par voie radicalaire choisis dans le groupe des polysilasesquioxane oligomères polyédriques réactifs (POSS) de formule générale (RSiO_{1,5}) ₙ avec n = 4, 6, 8, 10, 12 et R = radical organique de 1 à 100 atomes C et 0 à 50 atomes N et/ou 0 à 50 atomes O et/ou 0 à 50 atomes F et/ou 0 à 50 atomes Si et/ou 0 à 50 atomes S et ayant une masse molaire de 250 à 25 000 Daltons,
avec 0,01 à 10 parties en poids d'un composant initiateur (C), constitué par au moins un initiateur radicalaire lipophile contenant un ou plusieurs groupes azo ou peroxo thermiquement labiles, ainsi que 0 à 200 parties en poids d'eau, le composant monomère (B), le composant initiateur (C) et l'eau pouvant être ajoutés simultanément, successivement ou en mélange à la dispersion de base de polyuréthane (A), puis
a₂) une polymérisation radicalaire du composant (B) est réalisée à l'intérieur des micelles de la dispersion de base de polyuréthane (A) dans le mélange réactionnel de l'étape a₁) par la décomposition thermique du composant (C),
ainsi qu'éventuellement par
b) la mise en réaction ultérieure du composant dispersion ou liant constitué des composants (A) à (C) de l'étape a₂) avec 20 à 100 parties en poids d'un composant agent de réticulation (D) (agent de durcissement), des polyisocyanates (de laque) dispersibles dans l'eau contenant des groupes isocyanate reliés aliphatiquement et/ou cycloaliphatiquement et/ou aromatiquement étant utilisés en tant que composant agent de réticulation (D), qui peuvent contenir 0 à 25 % en poids d'un solvant organique.

2. Dispersion hybride polyuréthane-polymère selon la revendication 1, **caractérisée en ce que** des dispersions de polyuréthane éventuellement à fonction hydroxy et/ou amino à base de polyalkylène glycols (modifiés hydrophobiquement), de polyesters aliphatiques ou aromatiques, de polycaprolactones, de polycarbonates, d'α,ω-polybutadiène polyols, d'α,ω-polyméthacrylate diols, d'α,ω-dihydroxyalkylpolydiméthylsiloxanes, de macromonomères, de téléchéliques, de résines époxyde à fonction hydroxy, de résines alkyde à séchage oxydatif à base de bisépoxydes et d'acides gras insaturés, de polysulfures à fonction hydroxy ou leurs mélanges sont utilisés en tant que composant (A).

3. Dispersion hybride polyuréthane-polymère selon la revendication 1, **caractérisée en ce que** des dispersions de polyuréthane qui contiennent en tant que groupes constitutifs des macromonomères modifiés latéralement par du fluor à base de produits de réaction
a) d'alcools perfluoroalkyliques, de diisocyanates et de diéthanolamine, des alcools perfluoroalkyliques contenant des groupes méthylène terminaux (espaceurs hydrocarbonés) de formule générale
CF₃- (CF₂)ₓ- (CH₂)_{y}-OH
avec x = 3 à 20 et y = 1 à 6,
ou des alcools oligomères d'oxyde d'hexafluoropropène (HFPO) de formule générale
CF₃CF₂CF₂O- (CF (CF₃) CF₂O)_{z}-CF (CF₃) CH₂-OH
avec z = 1 à 10,
ou leurs mélanges étant utilisés de préférence,
et/ou
b) de perfluoroalkylalcènes et de diéthanolamine, des perfluoroalkylalcènes contenant des groupes méthylène terminaux (espaceurs hydrocarbonés) de formule générale
CF₃- (CF₂)ₓ- (CH₂) =CH₂
avec x = 3 à 20
ou leurs mélanges étant utilisés de préférence,
et/ou
c) de (per) fluoro (méth) acrylates d'alkyle et/ou de (méth)acrylates de (per)fluoroalkyle et/ou de (per)fluoro(méth)acrylates de (per)fluoroalkyle et de diéthanolamine
et/ou
d) d'oxydes de (per)fluoroalkylalkylène et de N-méthyléthanolamine ou de diéthanolamine,
sont utilisées en tant que composant (A).

4. Dispersion hybride polyuréthane-polymère selon l'une quelconque des revendications 1 à 3, **caractérisée en ce que** des polysilasesquioxanes oligomères polyédriques réactifs (POSS) de formule générale (RSiO_{1,5})₈ avec R = méthacryloyloxypropyle et éventuellement CH₂CH₂CF₂CF₂CF₂CF₂CF₂CF₃ et/ou H et/ou alkyle en C₁-C₂₅ et/ou cycloalkyle en C₃-C₂₅ et/ou aryle en C₆-C₃₀ et/ou (CH₂)₃ (OCH₂CH₂)ₙOMe et/ou aminopropyle et/ou époxypropyle et/ou diméthoxysilyloxy et/ou isocyanatopropyle et/ou triéthoxysilylpropyle sont utilisés en tant que composant (B)(iii).

5. Dispersion hybride polyuréthane-polymère selon l'une quelconque des revendications 1 à 4, **caractérisée en ce que** des polysilasesquioxanes oligomères polyédriques réactifs (POSS) de formule générale
(RₐX_{b}SiO_{1,5})ₘ
dans laquelle
a = 0 ou 1,
b = 0 ou 1,
a+b = 1,
m = 2, 6, 8, 10, 12, et
R = atome d'hydrogène, groupe alkyle, cycloalkyle, alcényle, cycloalcényle, alcynyle, cycloalcynyle ou unité polymère, qui sont à chaque fois substitués ou non substitués, ou des unités agrégées silicium-oxygène oligomères polyédriques fonctionnalisées supplémentaires, qui sont reliées par une unité polymère ou une unité de pontage,
X = groupe oxy, hydroxy, alcoxy, carboxy, silyle, alkylsilyle, alcoxysilyle, siloxy, alkylsiloxy, alcoxysiloxy, silylalkyle, alcoxysilylalkyle, alkylsilylalkyle, halogène, époxy, ester, fluoroalkyle, isocyanate, isocyanate bloqué, acrylate, méthacrylate, nitrile, amino, phosphine, polyéther, ou substituants de type R comprenant au moins un tel groupe de type X,
aussi bien les substituants de type R que les substituants de type X étant identiques ou différents,
sont utilisés en tant que composant (B)(iii).

6. Dispersion hybride polyuréthane-polymère selon l'une quelconque des revendications 1 à 5, **caractérisée en ce qu'**un initiateur radicalaire qui présente une demi-vie de 1 heure à une température de décomposition dans la plage allant de 40 à 120 °C est utilisé en tant que composant (C).

7. Dispersion hybride polyuréthane-polymère selon l'une quelconque des revendications 1 à 6, **caractérisée en ce que** le 2,2'-azobis(2-méthylbutyronitrile) et/ou le 2,2'-azobis(2-méthylpropionitrile) est utilisé en tant que composant (C).

8. Dispersion hybride polyuréthane-polymère selon l'une quelconque des revendications 1 à 7, **caractérisée en ce que** le rapport molaire initiateur/monomère entre les composants (B) et (C) est ajusté à une valeur de 0,001 à 0,05.

9. Dispersion hybride polyuréthane-polymère selon l'une quelconque des revendications 1 à 8, **caractérisée en ce que** dans l'hybride polyuréthane-polymère modifié anioniquement constitué par les composants (A) à (C), la teneur en groupes carboxylate et/ou sulfonate est ajustée à 5 à 25 meq· (100 g)⁻¹, de préférence à 10 à 20 meq· (100 g)⁻¹, et l'indice d'acidité à 2,5 à 15 meq de KOH-g⁻¹, de préférence à 5 à 12,5 meq de KOH · g⁻¹.

10. Dispersion hybride polyuréthane-polymère selon l'une quelconque des revendications 1 à 9, **caractérisée en ce que** la teneur en solides d'hybride polyuréthane-polymère modifié par du fluor constitué par les composants (A) à (C) est ajustée à 30 à 70 % en poids, de préférence à 40 à 60 % en poids, par rapport à la quantité totale de la dispersion hybride polyuréthane-polymère.

11. Dispersion hybride polyuréthane-polymère selon l'une quelconque des revendications 1 à 10, **caractérisée en ce que** le rapport entre la teneur proportionnelle en solides de résine de polyuréthane (modifiée par du fluor) du composant (A) et de résine de polymère (modifiée par du fluor) des composants (B) et (C) est ajusté de 20 sur 80 à 80 sur 20 % en poids, de préférence de 40 sur 60 à 60 sur 40 % en poids.

12. Dispersion hybride polyuréthane-polymère selon l'une quelconque des revendications 1 à 11, **caractérisée en ce que** les dispersions de polyuréthane ou les dispersions hybride polyuréthane-polymère contiennent moins de 10 % en poids de solvants organiques.

13. Dispersion hybride polyuréthane-polymère selon l'une quelconque des revendications 1 à 12, **caractérisée en ce que** la taille de particule moyenne des micelles est de 50 à 500 nm, de préférence de 100 à 400 nm.

14. Dispersion hybride polyuréthane-polymère selon l'une quelconque des revendications 1 à 13, **caractérisée en ce que** la masse molaire moyenne (moyenne en nombre) est de 50 000 à 500 000 Daltons.

15. Dispersion hybride polyuréthane-polymère selon l'une quelconque des revendications 1 à 14, **caractérisée en ce que** le rapport entre le composant agent de réticulation (D) et le composant liant des composants (A) à (C) est de 1:3 à 1:5.

16. Procédé de fabrication de la dispersion hybride polyuréthane-polymère selon l'une quelconque des revendications 1 à 15, **caractérisé en ce qu'**un composant dispersion est fabriqué par
a₁) éventuellement la dilution d'une dispersion de base de polyuréthane modifiée par du fluor (A) avec de l'eau et le mélange avec un mélange préfabriqué des composants (B) et (C), ainsi qu'avec de l'eau, le composant monomère (B) ou ses constituants individuels, le composant initiateur (C) et l'eau pouvant être ajoutés simultanément, successivement ou en mélange à la dispersion de base de polyuréthane (A), puis
a₂) la réalisation d'une polymérisation radicalaire du composant (B) par la décomposition thermique du composant (C)
ainsi qu'éventuellement par
b) la mise en réaction ultérieure du composant liant constitué des composants (A) à (C) de l'étape a₂) avec 20 à 100 parties en poids d'un composant agent de réticulation (D).

17. Procédé selon la revendication 16, **caractérisé en ce que** l'étape de réaction a₁) est réalisée à une température de 15 à 35 °C, de préférence de 20 à 30 °C.

18. Procédé selon l'une quelconque des revendications 16 à 17, **caractérisé en ce que** l'étape de réaction a₂) est réalisée à une différence de température de ± 10 °C par rapport à la température à laquelle le composant (C) présente une demi-vie de 1 heure.

19. Procédé selon l'une quelconque des revendications 16 à 18, **caractérisé en ce que** l'étape de réaction a₂) est de préférence réalisée à une température de 80 ± 10 °C lors de l'utilisation de 2,2'-azobisisobutyronitrile en tant que composant (C).

20. Procédé selon l'une quelconque des revendications 16 à 19, **caractérisé en ce que** la polymérisation radicalaire à l'étape de réaction a₂) est réalisée sans émulsifiants supplémentaires.

21. Procédé selon l'une quelconque des revendications 16 à 20, **caractérisé en ce que** l'étape de réaction b) est réalisée à une température de 15 à 35 °C, de préférence de 20 à 30 °C.

22. Utilisation de la dispersion hybride polyuréthane-polymère selon l'une quelconque des revendications 1 à 15, **caractérisée en ce qu'**elle est utilisée sous forme mono- ou bicomposante.

23. Utilisation de la dispersion hybride polyuréthane-polymère selon la revendication 22, **caractérisée en ce que** lors d'une application bicomposante, une dispersion hybride polyuréthane-polymère formulée ou non formulée est utilisée en tant que composant liant et des polyisocyanates (de laque) émulsifiables dans l'eau sont utilisés en tant que composant agent de durcissement.

24. Utilisation de la dispersion hybride polyuréthane-polymère selon l'une quelconque des revendications 22 ou 23 dans le domaine de la construction ou de l'industrie pour le traitement ou la modification de surface oléofuge et hydrofuge permanent de substrats minéraux et non minéraux, tels que
a) des surfaces inorganiques,
telles que p. ex. des matières et des matériaux de construction poreux, aspirants, rugueux et polis de tout type (tels que p. ex. béton, gypse, silice et silicates, pierre artificielle, pierre naturelle (telle que p. ex granite, marbre, grès, ardoise, serpentine), argile, ciment, tuile), ainsi que des émaux, des charges et des pigments, du verre, de la céramique, des métaux et des alliages de métaux,
b) des surfaces organiques
telles que p. ex. du bois et des matériaux à base de bois, des feuilles de placage en bois, des plastiques renforcés par des fibres de verre (GFK), des plastiques, du cuir, des fibres naturelles, des polymères organiques polaires de tout type, des matériaux composites.

25. Utilisation de la dispersion hybride polyuréthane-polymère selon l'une quelconque des revendications 22 à 24 pour le traitement ou la modification de surface oléofuge et hydrofuge permanent de substrats minéraux et non minéraux dans les domaines d'application
de la construction, tels que p. ex.
- des revêtements anti-graffiti/anti-salissures,
- des revêtements faciles à nettoyer,
- d'autres revêtements de tout type (tels que p. ex. des revêtements de balcons, des revêtements de toits (tuiles), des vernis au four, des peintures et des laques, des peintures de façades, des revêtements de sol, des planchers industriels faiblement, moyennement et hautement résistants, des revêtements d'étages de parking, des planchers de sport)
- des joints,
- des éléments préfabriqués en béton,
- des pièces moulées en béton,
- des carreaux et des jointures,
- des colles et des agents d'étanchéité,
- des murs anti-bruits,
- des agents anticorrosion,
- des enduits et des enduits décoratifs,
- des systèmes composites isolants thermiques (WDVS) et des systèmes isolants thermiques (WDS),
ainsi que
de la non-construction et de l'industrie, tels que p. ex.
- l'industrie automobile,
- le prélaquage en continu,
- les vernis au four,
- les façades en verre et les surfaces en verre,
- la céramique et la céramique sanitaire,
- la finition du cuir,
- les charges et pigments à surface modifiée,
- le revêtement du papier,
- les rotors d'éoliennes,
- les peintures pour navires.
